(19)

Europäisches
Patentamt
European
Patent Office
Office européen
des brevets

(11) **EP 4 366 312 A1**

(12) **EUROPEAN PATENT APPLICATION**

(43) Date of publication:
**08.05.2024 Bulletin 2024/19**

(21) Application number: **22205268.0**

(22) Date of filing: **03.11.2022**

(51) International Patent Classification (IPC):
**H04N 19/98** (2014.01)    **H04N 23/741** (2023.01)
**H04N 5/57** (2006.01)

(52) Cooperative Patent Classification (CPC):
**H04N 23/741**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.
5656 AG Eindhoven (NL)**

(72) Inventor: **MERTENS, Mark Jozef Willem
Eindhoven (NL)**

(74) Representative: **Philips Intellectual Property &
Standards
High Tech Campus 52
5656 AG Eindhoven (NL)**

(54) **COORDINATING DYNAMIC HDR CAMERA CAPTURING**

(57) For meeting the future demand of high quality yet economically feasible high dynamic range video program creation, the inventor proposes a method of in a video camera (201) setting a video camera capturing mode of specifying output pixel luminances in one or more graded versions of output video sequences of images, comprising:
- an operator of the video camera moving to at least two positions (Pos1, Pos2) in a scene which have a different illumination compared to each other, and capturing at least one high dynamic range image (o_ImHDR) for each of those at least two positions of the scene;
- a color composition director analyzing for each of the at least two positions the captured at least one high dynamic range image to determine a region of maximum brightness, and determining at least one of an iris setting, a shutter time, and an analog gain setting for the camera;
- capturing for each position of one of the at least two positions (Pos1, Pos2) a respective master capturing (RW) using the at least one of an iris setting, a shutter time setting, and an analog gain setting for the camera, and keeping iris, shutter time and analog gain settings constant for later capturing in at least the corresponding position;
- determining at least a respective first graded image (ODR) for the respective master capturing, which consists of mapping by a respective luminance allocation function (FL_M) of digital numbers of the master capturing to nit values of the first graded image (ODR), by the color composition director establishing a shape of such luminance allocation function; and
- storing the respective luminance allocation functions (Fs1, Fs2) for the at least two positions, or parameters uniquely defining these functions, in respective memory locations (221, 222) of the camera.

EP 4 366 312 A1

Fig. 2

200

**Description**

FIELD OF THE INVENTION

The invention relates to methods and apparatuses for coordinating in variously lit regions of a scene the capturing of images by one or more cameras, in particular those who produce an image signal which comprises a primary High Dynamic Range image and luminance mapping functions for calculating a secondary graded image with different, typically lower dynamic range than the primary High Dynamic Range image based on the pixel colors of the primary HDR image.

BACKGROUND OF THE INVENTION

Optimal camera exposure is a difficult problem in non-uniformly lit environments (especially when not having a single view on a non-uniformly lit environment, but when moving through various regions of different illumination and object luminance liberally). Historically many video productions were performed under controlled lighting (e.g. studio capture of plays or news), where e.g. the ceiling was full with lights to create a uniform base lighting. Nowadays, there is a desire to go shoot on the spot, and also due to cost reasons sometimes with small teams (maybe one presenter, one camera man, and one audio guy). Also, the boundary between professional producers and "lay man" producers is becoming somewhat less crisp, as we see e.g. from internet vloggers (who may know a little about lighting techniques, but not always sufficient to not create challenging lighting conditions), or even amateur capturings with mobile phones may be the most interesting news item. Further technical assistance on the technical matter of obtaining (good) YcbCr pixel color codes may always be useful.

Already in SDR (Standard Dynamic Range, a.k.a. Low Dynamic Range), although ideally one works under well lit conditions (e.g. studio 1000 lux), one could already have capturing situations under ~300 lux (daytime; indoors), ~10× lower (low light), or even at or below 1 lux (dark). [The ~ sign indicates "approximately"] When using "amateur" cameras, auto-exposure may happen quite automatically (in more professional systems usually one will control some aspects, like e.g. a maximum amount of noise, although in some situations it may be better to at least see something, albeit noisy, than very little). Environments may produce not only very different average luminance, or light level or illuminance, but also (especially when there are emissive objects in the scene) there may be a considerable spread or ratio between the luminance of object areas which project on different sensor pixels. E.g., right before sunrise, the local environment in which the videographer is standing may not get any direct sunlight yet, but the sky in the distance may already be lit by the sun. So the sky may have a luminance of several hundredths of nits (which is the technical better-voicable naming of Cd/m^2), whereas the objects around you may only have luminances of a few nits or less. During nighttime, the average street luminance may be a few nits, yet while looking in the direction of light sources one may see several 10,000s of nits. During daytime in the sun, objects may reflect many thousands of nits, but again all depends on whether we have a white diffuse (or even specularly reflecting) object in the sun, or a black object in some shadow area. Whereas indoors objects will fall around the 100 nit level, again depending on whether the object is e.g. lying close to the window in a beam of sun, or in an adjacent unlit room which can also be captured from the same shooting location when the door is open. Actually, this is exactly why engineers wanted to move towards HDR imaging chains (the other factor being the visual impact for viewers). SDR cameras with a small dynamic range between darkest (non-noisy) capturing of dark object luminances and full pixel well with not so many more photo-electrons, would typically expose correctly for the actors or speakers indoors, and thereby clip to white (or pastel color) the objects outside the window. Sometimes this would give pretty weird results, if the presenter is e.g. positioned against a bookshelf in the deep end of a room, far away from a window in quadratically diminishing illumination, and one sees half of the bookshelf disappear towards the window (become clipped to maximum white). The worst cases, but those would normally be shot only by amateurs (unless for express artistic reasons), would even have half a face clip to white. But there is not merely a camera problem (regarding its maximum capturing capabilities and the optimally controlled use of those), there was also a problem in the manner in which one in standard manner wanted to code the captured image. Even if a camera could capture very deep blacks accurately, i.e. with a noise floor say below 1/10000 of full well, a typical representation in any output image is to put the main person in the scene at around 25% of white (the white to be displayed by driving a display to its maximum brightness, e.g. backlight full on and LCD pixels fully open), as a percentage of luminance (which would in an approximately square root luma coding correspond to a luma of 128 out of 255). This means we have only 2 stops (i.e. multiplicative factors x2) of brightness left above face color, guaranteeing that anything in the scene that is a little brighter than the local diffusive white would clip (potentially even in the raw camera capturing of the sensor). One may want to tune on this, by using the controls of the camera, but that would be a setting for the current view, from the current position, in the current scene. Even if one can apply automatic camera exposure control several times for different shots of different positions, there is no relationship between those settings.

The human eye adapts to all of this in an almost perfect manner, as it can change the chemistry of signal pathways in the cones, leading to different sensitivity, and weigh the signals of neurons, locally for brighter and darker objects in the field of view as desired (e.g. staring for some time at a bright red square, will thereafter make you see an anti-red cyan square in your field of view, but that will soon be corrected again). In the brain we are mostly interested in what kind of object we see, e.g. a ripe sufficiently yellow banana, not so much in how exactly the banana was lit by which beam of sunlight. The brain wants to come to the ultimately summarized representation allowing to see the tiger hiding in the bushes, whether during the day, or at night. A camera however counts photons, converting each group of N incoming photons to a measured photo-electron, and is in that respect both a simple device, but also for advanced applications a rather dumb device.

In a number of scenarios more than one camera and possibly more than one moving camera man may be involved in the production of the video, and it may be desirable to coordinate the brightness look of those cameras. In several productions this may be done in a separate locus or apparatus, e.g. in an Outside Broadcast (OB) truck (or even grading booth in case of non-real-time airing). Usually now everything relating to the production of a good video has to happen, real-time, so by a team of specialists who focus on different things. A director of e.g. a sports broadcast is occupied way too hectically to say anything about the capturing except for which camera man should roughly capture what, and so he can select which primary camera feed ends up in the ultimate broadcast signal at which time. In fact, whereas a movie is a perfect artistic synchrony between plot, geometric capturing compositions, emotions, music, etc., which gets both thoroughly planned before the movie (story boards etc.) and in post-production (applicable looks being graded on the captured content), the real-time producer has to bring in all the art on-the-fly. The life broadcast production can only bring in his talent and experience, e.g., having watched and produced many football matches before, he knows when the audience would prefer to see the score board rather than the boring speech of somebody. But technically, the primary camera feeds should be "just good, period", so the director can rely on them when selecting. Cameras can have a few capturing settings, such as a knee point for rolling off or a black control, and one would typically set these to the same, standard value, so that one gets e.g. the same looking blacks. Under his fast pace, if the colorimetry is wrong, the director will just discard the feed like the one of a camera man who is still struggling to e.g. get the right framing of a zoomed fast moving action. So things should be standardized and simple, and technically the primary camera feeds should at least fulfill minimal requirements of uniformity. Ergo, any system catering for such a scenario should pragmatically be sufficiently simple and workable. For the increased complexity of liberal high dynamic range production, compared to standard SDR production, one may expect to rely even more on application-tailored technical solutions. But the complexity may also enable a uniform approach (though typically customizable) for several approaches. E.g., any future improved system for consumer capturing, may have similar needs of relative simplicity of operation, yet while powerfully covering many different capturing situations.

If one makes a movie consisting of several shots (e.g. daytime and nighttime), the coordination of those can be done after capturing, e.g. a human color grader may change the ultimate luminances in the master HDR image (e.g. a 1000 nit maximum image), so that the dark scene looks sufficiently dark after a previous daytime scene in the movie, or conversely not too dark compared to an upcoming explosion scene, etc. The grader can in principle in his color grading software optimize the **master image** luminance of each and any pixel (e.g., he may define the YCbCr color code of pixels of an explosion so that the brightest pixel in the fireball is no higher than 600 nit, even in a 1000 nit video maximum luminance (ML_V) master HDR video). But that does not say much yet about the relationship with the luminances of the fireball in <u>the real world.</u> Not only will those luminances depend on the amount of heat that happens to be produced in the explosion (which is typically not something pyrotechnicians accurately aim for), but importantly a camera is not a luminance meter, so the amount of photo-electrons accumulated in the pixel corresponding to the brightest spot of the fireball depends , in addition to the sensor physics, the opening setting of the iris, and the exposure time of the shutter (and maybe a neutral density filter in the optical path). This is the bridging the gap between the world of scene (and camera) and the world of the ultimate displaying. In a movie production the color grader may be the entity that crosses the divide, i.e. selects the appropriate specification of what shall be displayed exactly for the captured image. One could say that ultimately what one sees displayed of the image is what matters, not the mathematical numbers of the pixel colors. But opponents of the display-referred approach may argue that one the one hand there is no certainty on how people will see the result, and that there should be some deference for the original image (which may e.g. be of perfect future-oriented quality). Still, it has been shown by inter alia the present applicant, that one can meet requirements by defining (at least one) graded image, for some ideally envisaged target display.

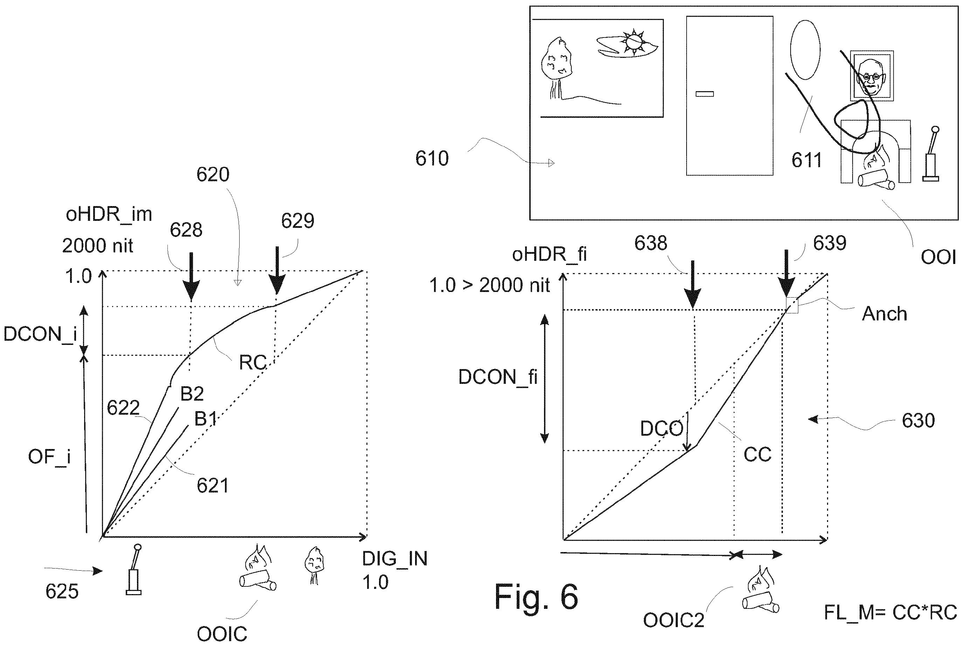

Grading (or color grading, although the primary aspect to fine-tune are the brightnesses or luminances of the colors, the latter being a specific formulation of the brightness channel of the video) refers to some human or automaton (or semi-autonomous combination) specifying as needed the pixel luminances of various objects of a captured image along an elected range of luminances. E.g. as shown in Fig. 6, one may want to make a 2000 nit white point luminance a.k.a. maximum luminance graded master HDR video as (only, or one of the) output video of one or more cameras which record the video program in the scene. The grading allocates the various objects that can be captured as digital numbers from the analog-digital convertor (ADC 206) of the camera to elected (good looking) luminance values. The nomenclature digital number points to the fact that the number, which is a relative indication of how bright an object was relatively in the captured scene, is e.g. a 16 bit number 01101101111110000. E.g., a ~ 5000 nit flame of a open fireplace in the scene can end up at digital number 50000 (or normalized 50000/65536=0.76), and the grader elects it looks good in the 2000 nit master grading of his video at e.g. 500 nit. Ergo, if the end-consumer purchases a television with a display maximum luminance (ML_D) equal to the 2000 nit (ML_M) value, he will typically display all luminances as formulated in the video signal, i.e. in the master HDR output image(s). If the television has e.g. only a capability of ML_D= 700 nit, he will down-grade the 2000 nit master HDR image by applying a display optimization mapping as we described in previous patents, but that is tangential to the present camera-capturing and production technologies being described. We will call in this patent the image of raw digital numbers measuring the scene a "capturing", to discriminate from "images" (e.g. output images, such as from a camera to an OB truck, or images to be broadcasted, which may be differently defined but could also elegantly be similarly defined if one designed to shift some of the color math to the cameras), which we typically consider graded, i.e. having optimal brightness values, typically luminances or luma values coding for them, according to some reference (e.g. a 2000 nit targeted display). The common election of such a reference, makes that camera coordination becomes easier, although still not trivial, but at least commonly referable.

Moreover, even if one has the liberty to rely on perfect grading in post-production (i.e. any "error" in a pixel luminance or color could at least in theory be corrected by full re-definition of those pixel color values during post-production grading), which is a liberty that real-time productions like a capturing of the tour the France on a motorcycle do not have, there is still the challenge or opportunity that one would like more freedom in the (exposure of) the raw capturing of a single scene (which may consist of following somebody through a tour of a factory e.g.; or the bicycles riding through a tunnel).

And furthermore, in some occasions one may -immediately- desire the production of several videos of different dynamic range for the capturing (e.g. a HDR version and a corresponding LDR version to be offloaded from camera to some distribution network or memory). E.g. the LDR version may be broadcasted immediately to customers (e.g. via a cable television or satellite distribution system), and the HDR version may be stored in the cloud for later use, maybe a rebroadcast or video snippet reuse ten years later.

Classical movie or series production may shoot the same scene time and again, from different angles successively (e.g. for a fighting scene once from behind the aggressor so we look down to the victim on the ground, and once lateral from close to the ground), but even there the below presented innovations may provide benefits for increasing production speed, simplify capturing, or increase or relax post-processing possibilities, but in some situations one may want to capture the entire action through a complicatedly illuminated scene in one, or a few coordinated, shots. We indeed see a desire that not only professional shows will no longer only shoot from the few static television cameras placed around the scene, but even semi-professional company communication videos (e.g. private company network airing of a reporting of a visit of employees from another company or hospital to a business unit) may want to depart from the static presenter to somebody moving around everywhere, leaving the presentation room and walk into the corridors, maybe even step into his car and continue the presentation while driving. That is not difficult when producing just any capturing "as is", i.e. with either fixed exposure settings or relying on whatever auto-exposure the camera does (suffering any consequence, like typically clipping, and incorrect color of regions, e.g. parts which are too dark and badly visible, or just more ugly than optimal), but is quite a challenge for a high quality HDR production, especially given that the technology is relatively new, and many are still working on optimizing the basics.

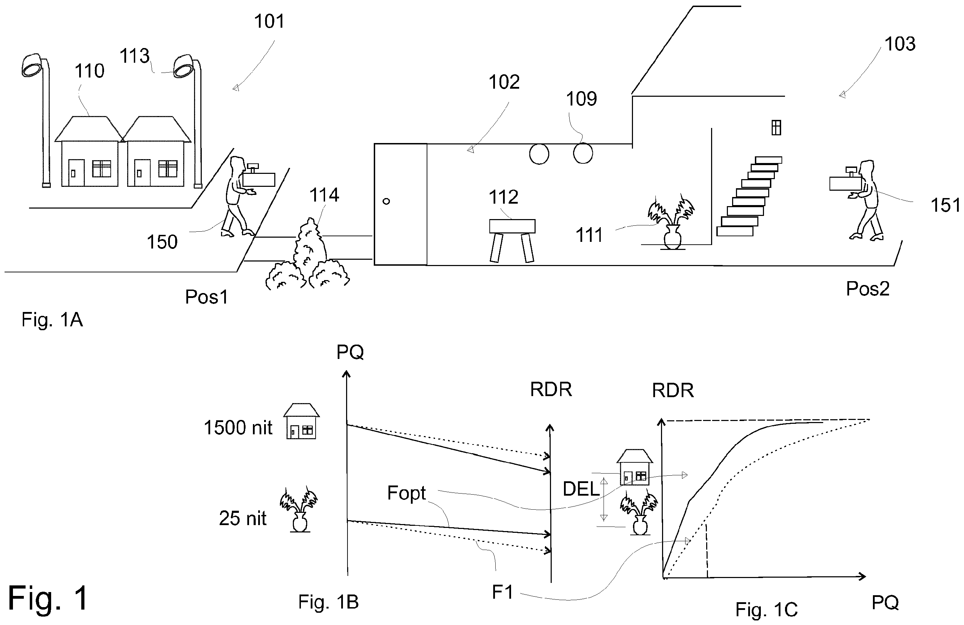

**Fig. 1A** shows an illustrative example of a typical non-trivial dynamic capturing, with indoors and outdoors capturing. It is known that even with classical one-level exposure (i.e. one comes to some integral measurement of the illumination level of the present scene, which, to fill pixel wells up to a certain level, needs a corresponding value for the camera settings, iris, etc., i.e. leads to the setting of such values for the further capturing), e.g. when being near a window where the light level goes down quadratically with distance, exposing for the face of the speaker may over-expose objects near the window, i.e. certainly in a Low Dynamic Range (a.k.a. Standard DR) capturing, and certainly when there are beams of sunlight, some pixels may clip to the maximum capturable level (white).

We want a camera man to be able to walk liberally from the outdoors (101) to an indoors area (103), possibly through a corridor (102) where there may be some lamps (109) to create a gradual change in local illumination (illuminance). Getting a "correct" exposure in a high dynamic range camera (i.e. a camera which has e.g. 14 stops or more = 16000:1, e.g. 100,000 photo-electrons full well and 5 electrons noise), in the sense of a "good" capturing of all information, is not so difficult with such a large capturing dynamic range. Since one can go much darker -with good capturing precision- than a bad camera, one may e.g. merely focus on getting the brightest objects sufficiently captured without color channel clipping or desaturation. One could always brighten later, at least in principle, by grading. Note that for very challenging HDR scenes a 14 stop capturing may still require care (e.g. one should not expose for the filament of a light bulb which may be more than a million nit, if one doesn't want too noisy an exposure for dark corners).

Even if exposure for high dynamic range cameras (/video usage chains) may not be too problematic, since one may record the objects as relatively dark percentages of white, which objects can then be brightened according to desire in post-capturing image processing, even with HDR capturing the problem with correct exposure comes back when a (typically) secondary image of lower dynamic range is desired. We need to compress a HDR scene then in a low available dynamic range, and that requires more reflection (it can partly be seen as a virtual re-exposure).

In general, iris or exposure control can either be done manually or automatically. E.g., as shown in EP0152698, the captured image analysis can consist of determining a <u>maximum</u> of a red, green and blue component capturing, and set iris and/or shutter (possible also in cooperation with a neutral density filter selection, and electronic gain) so that this maximum doesn't clip (or doesn't clip too much).

The <u>average</u> (or more precisely some smart average algorithm, giving e.g. less weight to bright sky pixels in the summation) of a scene luminance (or relative photon collection) may be a reasonable measure at least in a SDR scenario. This is inter alia also related to how the captured SDR lumas are straightforwardly displayed in an SDR displaying scenario: the brightest luma in the image (e.g. 255), functioning as a largest control range value of a display driving signal, typically drives the display so that it displays its maximum producible output (e.g. for fixed backlight LCD the LCD pixels driven to maximally transparent), which displayed color visually looks white. The reasonable assumption -for the "display as a painting" approach is that under a single lighting (i.e. reasonably uniform, e.g. by using controlled base lighting) diffusely reflecting objects will reflect between about 1% and 95% of the present light level, and specular points will look slightly white. This will form a histogram of luminances spread around a ~25% level (or lumas spread around halfway luma code), To the human eye, the image will look nearly the same when displayed on a 200 nit ML_D display, i.e. with the white pixels having a displayed luminance of 200 nit, as on a 100 nit display, just as if a painting -which is primarily interesting because of the colors of the objects on it- is lit by stronger lamps, because the eye compensates the luminance difference away, and the brain only cares about seeing the relative differences of the object points on the painting respectively the LDR display. It also makes sense then to characterize this range of scene luminances relatively, by mapping its average to what fills the camera sensor pixels to ~ 50%, which will be even for LDR sensors a good sampling of the available information in such a scene. However, even in an SDR imaging chain, i.e. with SDR camera capturing yielding an SDR image as output and displaying on a legacy SDR display, the average is not such a good measure for e.g. bimodal scenes (e.g. indoors and the outside world through a window), or strongly narrow modal scenes, like e.g. a coal mine only containing a few shades of black. Yet still, with a little bit of camera operator finetuning, and/or grading, SDR seems to have worked reasonably well in practice for say a century, showing home viewers everything from a coronation to the depths of the oceans. There only were a few desiderata prompting for a move to HDR, like brighter-than-white object capturing and rendering, and ideally also a better treatment of the blacks e.g., and a more professionally controlled image description framework building layers of technology starting from a common basis, such as an associated targeted display with the HDR images, which has a maximum luminance, e.g. 2000 nits (ML_V of the video images).

However, this manner of average-guided exposure is a widely deployed (in fact ad hoc/de facto standardized) video creation practice from the SDR era which is one example of the many technical approaches warranting a full rethinking and redefined approach in an HDR ecosystem.

There is a need for a pragmatic and quick, mostly automatic handling of good exposure of primary gradings and oftentimes also in addition secondary gradings for on-the-fly dynamic lighting environment capturing of one or more cameras, coming automatically out of the camera as graded output video sequences, so that the camera operator and possibly director can focus on artistic or storyline aspects, such as from which angle to shoot an actor.

SUMMARY OF THE INVENTION

The above needs are catered for by a method of in a video camera (201) setting a video camera capturing mode of specifying output pixel luminances in one or more graded versions of output video sequences of images, comprising:

- an operator of the video camera moving to at least two positions (Pos1, Pos2) in a scene which have a different illumination compared to each other, and capturing at least one high dynamic range image (o_ImHDR) for each of those at least two positions of the scene;
- a color composition director analyzing for each of the at least two positions the captured at least one high dynamic range image to determine a region of maximum brightness, and determining at least one of an iris setting, a shutter time, and an analog gain setting for the camera;
- capturing for each position of one of the at least two positions (Pos1, Pos2) a respective master capturing (RW) using the at least one of an iris setting, a shutter time setting, and an analog gain setting for the camera, and keeping iris, shutter time and analog gain settings constant for later capturing in at least the corresponding position;
- determining at least a respective first graded image (ODR) for the respective master capturing, which consists of mapping by a respective luminance allocation function (FL_M) of digital numbers of the master capturing to nit values of the first graded image (ODR), by the color composition director establishing a shape of such luminance allocation function; and
- storing the respective luminance allocation functions (Fs1, Fs2) for the at least two positions, or parameters uniquely defining these functions, in respective memory locations (221, 222) of the camera.

Video cameras have roughly two inner technical processes. The first one, in fact an optimal sampling of optical signals representing the physical world, is a correct recording and usually linear quantification of a color of a small part of a scene imaged by a lens onto typically a quadruplet of sub-pixels (e.g. Red, Green// Green Blue Bayer, or a Cyan-Magenta-Yellow based sampling) on a sensor (204). The controllable opening area of an iris (202), and a shutter (203) determine how many photons flow into the wells of each pixel (a linear multiplier of the local scene object brightness), so that one can control these settings so that e.g. the darkest pixel in the scene falls above the noise floor, e.g. 20 photo-electron measurement above 10 photon noise (and a noise of +- X photons on the value 20), and the brightest object in the scene fills the pixel to e.g. 95%. With an analog gain (205), one can pretend that more photons came in (as if the scene was brighter, because one may want to select iris and shutter also for other visual properties of the captured images such as depth of field and motion blur), by increasing a voltage representative of e.g. 25% pixel filling to the level of 50% (also in the digital domain one can amplify, but we will consider that under the more general class of all image improvement processes, not necessarily a multiplicative brightening). An analog-digital converter (206) represents the spatial signals (e.g. an image of red pixel capturings) as a matrix of digital numbers. Assuming we have a good quality sensor with a good ADC, a e.g. 16 bit digital number representation will give values between 0 and 65535. These numbers are not perfectly usable, especially not in a system which requires typical video, such as e.g. Rec. 709 SDR video, for a number of reasons. So, the second inner process, an image processing circuit (207) can do all needed of various transformations in the digital domain. E.g., it may convert the digital numbers by applying an OETF (opto-electronic transfer function) which is approximately a square root shape, to finally end up with Y'CbCr color codings for the pixels in the output image (for HDR these may be e.g. non-linear components defined by the OETF version of the Perceptual Quantizer function standardized in SMPTE ST.2084).

This image processing circuit (207) (e.g. comprising a color pixel processing pipeline with configurable processing of incoming pixel color triplets) will in a novel manner function in our below described technical insights, aspects, and embodiments, in that it can apply e.g. configurable functions to the luminance or luma component of a pixel color, to obtain a primary graded image (ImHDR) and/or a secondary graded image (ImRDR), e.g. a standard dynamic range (SDR) image. Typically these may be recorded in an in-camera memory 208. The camera may also have a communication circuit (218), which can e.g. output images over a cable (SDI, USB, etc.), wifi, etc. For the communication system (209) the camera can use we will e.g. assume for future-oriented professional cameras an internet protocol communication system. Also layman consumers shooting with a camera embodied e.g. as a mobile phone can use IP over 5G to directly upload to the cloud, but of course there are many other communication systems possible, and that is not the core of our technical contributions.

Simple cameras or simple configurations of more versatile cameras, may e.g. supply as output image one single grading (e.g. 1000 nit ML_V HDR images, properly luminance-allocated for any specific scene, e.g. a dark room with a small window to the outside, or a dim souk with sunrays falling onto some object through the cracks in the roof). I.e they produce one output video sequence of temporally successive images - but typically with different luminance allocations for various differently lit scene areas- which corresponds to the basic capturings of the scene whilst the at least one camera man walks through it whilst capturing the action or other scene content.

The idea is that this primary grading is established based on a sufficiently well-configured capturing from the sensor, i.e. most objects in the scene -also the brighter ones- are well represented with an accurate spread of pixels colors (e.g. different bright grey values of sunlit clouds).

Thereto the basic configuration is a quick or precise determination of the basic capturing settings of the camera (iris setting, shutter time setting, possibly an analog gain setting larger than 1.0). The further determinations of any gradings can then stably build upon these digital number capturings. In fact, the camera need not even output the raw capturing, but can just output the primary graded e.g. 1000 nit (master) HDR images. As said, the capturing is only a technical image, not so useful for humans, so it need not be determined, but could be if the primary luminance allocation function is invertible and co-stored casu quo co-output.

The best setting of the basic capturing settings is done by a human (e.g. the color composition director, or the camera operator who can during this initialization phase double the role of color composition director, if he is e.g. a consumer, or the only technical person in a 2-person offsite production team, the other person being the presenter), although this could also be determined by an automaton, i.e. e.g. some firmware. Fig. 6 shows an example of a user interface representation, which can be shown on some display (depending on the application and/or embodiment this display may reside in an OB truck, or at-home production such as REMI, or be e.g. a computer in some location on the set with a light covering interacting with the camera, and which a single person production team, i.e. the camera operator, may use to do his visual checks to better control the camera(s), or it may be attached to the camera itself, e.g. a viewer). Also shown are graphical views to determine functions, but one of the views, the image view(610) shows a captured image (possible mapped with some function to create a look for the display being used, the accurate colorimetry is not needed for determination of all of the various settings). Assuming it is a touch screen (the skilled person can himself understand how one can make equivalent versions, by e.g. using a sensor like a mouse) the human controller (i.e. what we named in the claim the role of the color composition director) can use his finger 611 to click on an object of interest (OOI). E.g. double tapping indicates (quickly) that the user wants these (bright) colors all well-captured in the sensor, i.e. below pixel well overflow for at least one of the three color components. An image analysis software program interacting with the user interface software (e.g. running on a computer in the OB truck) can then determine which colors are in the area where the flames of the open fireplace resides. Say the camera operator (in cooperation with the color composition director) has captured a first raw capturing, or a derived graded HDR image, or any derived grading for the display on which the color composition director decides his settings) has just determined a (at least one) original high dynamic range image (o_imHDR). When the color composition director clicks or taps in at least one place, the software can check whether in this capturing the colors are already well-represented. Say e.g. all pixels of this flame have their red and green components fall between lumas 990 and 1020, and the blue component being lower for a well-captured bright yellow color. This functions already as a (graded or coded) representation of a good capturing image (the software in the e.g. OB truck can also receive the capturing, and check whether all digital number are below power(2; number_of_ADC_bits)). On the one hand, as desired by the human, no pixel of this flame is clipping, and on the other hand the capturing seems good, because flames are a bright scene object, so we won't be capturing too few of the scene object's photons, which may leave the darker objects too noisy in the scene capturings/images. If the first original HDR image (and the settings which were used for it) are not already spot on, at least one further original HDR image may be taken. This could again be done by automatically operating software, or under the guidance of a human. E.g., the software knowing that this tapping indicated a selection of a near image gamut top image, if its color components (largest color component at least) are below a value corresponding to half pixel filling, the software can select e.g. to increase the shutter time by a factor two (provided that is still possible given the needed image repetition rate of the camera). If there is clipping, a secondary image can be taken with e.g. 0.75% of the previous exposure. Finally, if an original image is captured where the (elected) brightest object is indeed captured with at least one color sub-pixel near to overflow, i.e. any corresponding image pixel near to but not clipping, the HDR capturing situation is considered optimal, and the optimal values of the basic capturing settings are loaded into the camera (or primary camera which takes care of the system color composition initialization in case of a multi-camera system). That is for this position in the scene. In principle these settings may only be valid for this position in the scene. But it may be useful, and doable, if at least these basic capturing settings are taken the same for the entire shoot, i.e. all considerably differently lit positions all along the scene (which would not be true for the luminance allocation/re-mapping functions typically, at least the ones that determined the secondary, lower dynamic range grading). So there may be a basic capturing settings consolidation phase. If e.g. for a first part of the scene it is considered that 1/100s may be a good setting for the shutter, and for another area, which has brighter objects, 1/200s is determined, the camera may load 1/200s for the whole capturing of every position in the scene. This is because one determines then a total desired brightest object in the scene: the shorter shutter time will lower all digital numbers of the capturing, and depending on the allocation of luminances and/or lumas also be it in a different possibly non-linear manner also those values, but since the dynamic range faithfully captured by a high quality HDR camera, this is not a problem (ease of operation may be a more preferred property than having the best possible capturing for each individual position, which may be too high a capturing for many uses in many situations anyway).

We will assume in the elucidation a single set of optimal values for the basic capturing settings is determined after initialization, i.e. after discovering the scene by the camera operator walking to at least various positions of challenging lighting, and applying the present technical principles, but the skilled person can also understand how several sets of basic capturing settings can exist for corresponding various positions, and how these can be loaded when during the actual video capturing of the e.g. movie the camera operator walks and starts shooting in the corresponding position, just as the functions which map luminances to obtain various (at least one) output gradings would be loaded for calculation from their respective memory positions.

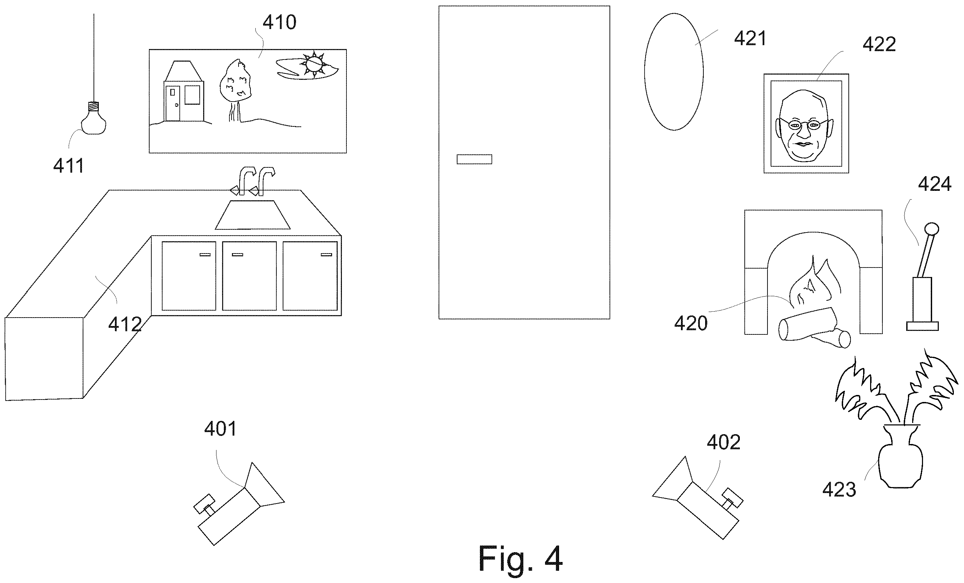

Different illumination comprises the following. It typically starts with how much illumination from at least one light source falls onto the scene objects, and gives them some luminance value. E.g. for outdoors shooting there may be a larger contribution of the sun, and a smaller one of the sky, and these may give the illumination level of all diffuse objects in the sun (of which the luminance then depends on the reflectivity of the object, be it e.g. a black or a white one). In an indoors room position-dependent illumination will depend on how many lamps there are, and in which positions, orientations (luminaire) etc. But for HDR capturing the local illumination or more exactly light situation determination should also include "outliers". As explained e.g. all or most of the pixels of a bright flame of thousands of nits should be taken into account when determining the basic capturing settings, but especially for large areas of bright regions, such as a sunlit outdoors seen through a window, may be desired to be captured at least below clipping, and perhaps even at lower sensor pixel filling percentages. Small specular reflection blotches may be clipped in the capturing. We will for simplicity explain as if only the position matters, but the skilled person understands that one can in more professional embodiments also take into account orientation of the camera. As elucidated with **Fig. 4,** a first camera 401 in a first position can see a different color/luminance composition if it is filming with an angle towards the indoors of that room (where in the example the brightest object is the flames 420, but it could also be a dimmer object, much dimmer than the outdoors objects), whereas if it points forward, it will see the outdoors world through the window (410). The light bulb 411 is typically a small object that might as well clip in any image (and also the sensor capturing). Even though the elliptical lamp 421 is large, the same may be true, although for such a large lamp it may be nice if at least for the highest dynamic range graded image output of the camera it still has some changing grey value from the outside to the middle (so we don't have an ugly "hole" or "blotch" in the image). Normal objects of "in-between" illumination like the kitchen 412, or the portrait 422, or the plant 423 will be automatically okay in the basic capturings if the camera (-system) has been set up according to the described procedure (those objects, e.g. the portrait may become more critical in the primary and secondary gradings being output of the camera(s)). A more critical object to check by the human operator (or automaton) is the poker 424 in a shadowy area in the room (where the light of the elliptical lamp is shadowed by the fireplace). This capturing could be too noisy, in which case one may decide to open up iris and shutter more, and maybe lose the gradients in the elliptical lamp, but at least have a better quality capturing of the poker (which will need brightening processing, e.g. when an SDR output video is desired).

The master capturing (RW) will be an image with the correct basic capturing settings (the last one of the at least one high dynamic range image (O-ImHDR)). From this image of the current scene position and/or orientation, at least one grading will be determined, e.g. to produce HDR video images as output, but not simply a scaled copy of the capturing, but typically with better luminance positions (values) along a luminance range for at least one scene region (e.g. dim the brightest objects somewhat, or put an important object at a fixed level, e.g. 200 nit, or brightening the darkest captured digital numbers somewhat corresponding to what value they would have with a pure scaling like mapping the maximum digital number to the maximum image luminance, and every lower value linearly).

A grading is not an image which has equal object as their corresponding digital number ratios, but there are different schools of thought, or application desiderata, for which the present technical solutions must be able to cater. A first application creates primary HDR gradings which remap the luminance positions the digital numbers would get by simple maximum-to-maximum scaling only a little bit. For this redistribution/remapping from the pure scaling the color composition director could e.g. use a power function, for which he can adjust the power value.

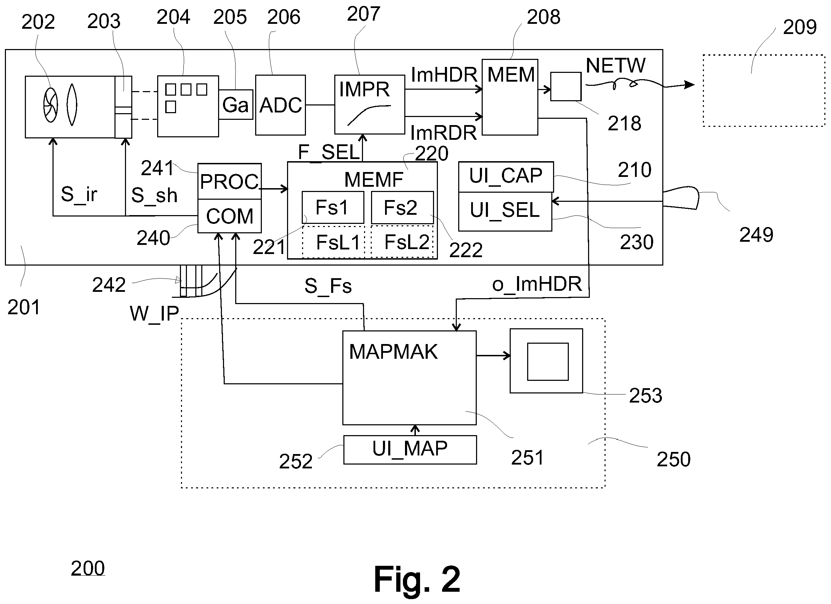

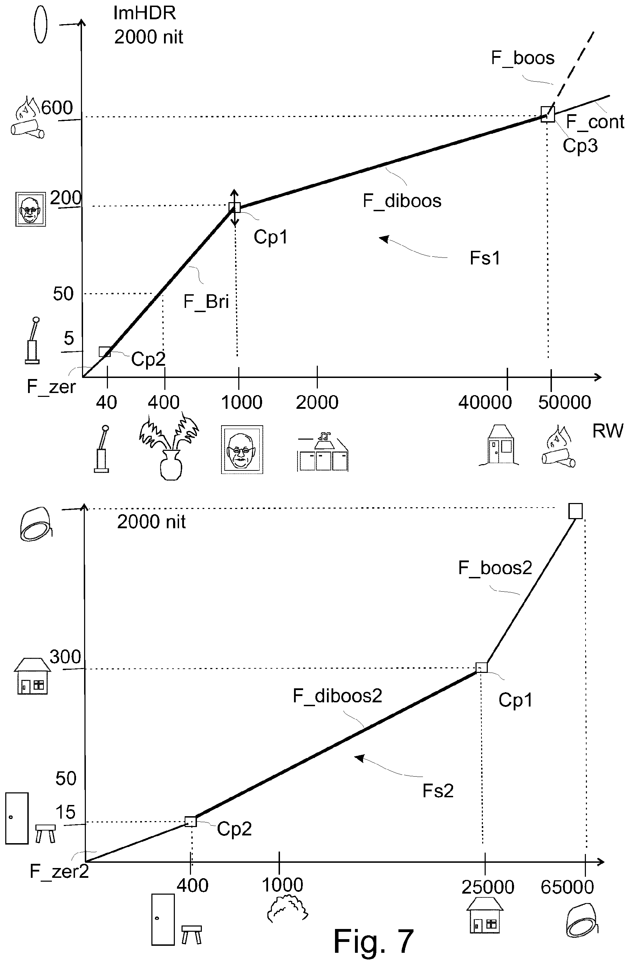

We will however in **Fig. 7** (non-limitedly) elucidate a typical simple grading control example, to quickly establish luminance mapping functions of the primary HDR grading (Fs1 and Fs2 for an indoors and outdoors location, assuming the basic capturing settings are determined the same for all locations, e.g. when the elliptical lamp just starts clipping to sensor and ADC maximum), for a really good grading, i.e. like the color composition director would relatively accurately like to see all luminances being displayed on a 2000 nit display, when receiving this 2000 nit ML_V defined HDR output image (ImHDR of Fig. 2).

The indoors is a relatively complex environment, because there are several different light sources (outdoor lighting in the kitchen through the window, the elliptical lamp, additional illumination from the flames, shadowy nooks, etc.). So there, to be sufficiently accurate yet still relatively quick (because there may be time before the actual shoot, but perhaps not too much time, or a layman consumer may not care for too many operations at all), the indoors position function -shown in the top graph- is controlled with 3 control points. Advantageously, the director may first establish some good bottom values. The guiding principle here is as said not to map the brightest object in the scene, i.e. some digital number close to 65000, on 2000 nit, and then see where all other luminances end up "haphazardly" below this. The idea is to give the darker objects in the scene, even in a 2000 nit ML_V grading, luminances which are approximately what they would be in a 100 nit SDR grading, and maybe somewhat brighter (e.g. a multiplicative factor 1.2), and maybe the brighter ones of the subset of darker objects (which the human can determine) ending at a few times 100 nit, e.g. 200 nit.

Indeed, in this mere elucidation example, the director has for his grading decided to select his first control point CP1 for deciding the luminance value of the painting on the HDR luminance axis (shown vertically). If this portrait was not strongly illuminated by the elliptical lamp (which is a strength he wants to make apparent to his viewers in this 2000 nit HDR video, yet not in a too excessive manner, or otherwise the portrait may distract from the action of the actors or presenters). Let's say that under normal levels of illumination (the average indoors illumination for this configuration of lamps as present in this scene) the portrait pixels would be given luminances of ~ 50 nit, now he may decide to map the average color of the portrait (or a pixel or set of pixels that gets clicked) to say 200 nit. A second control point CP2 may be used to determine the dark blacks (the poker). A good black value may be 5 nit. These two points already determine a first part of the first luminance mapping function Fs1 for this indoors position, a brightening segment F Bri. One could determine e.g. a multilinear mapping like this, or a more smooth one snaking around the multilinear curve, e.g. with parabolic smoothening parts where line segments connect. As explained above, the flames in the fireplace are also objects of interest. In the previous sub-process we have already made sure the are captured in good quality. Now in the grading phase (which the image processing circuit 207 will constantly perform on the fly for each time sequential captured video image during the actual shoot, but for which now the best reference grading i.e. the function to use is established) the criterion for the color composition director is too make sure the flame has a nice HDR impact, but is not too excessively bright. So an additional, third control point CP3 can be introduced (e.g. by clicking on a displayed view showing the function and some (representative) luminances on the vertical/output axis and digital numbers on the horizontal/input axis) and the director can move it to set the desired flame luminance in the to be outputted HDR primary grading (i.e. ImHDR) at e.g. 600 nit. This establishes a second segment (F_diboos) with which one can dim or boost a second selectable sub-range of pixel luminances/colors (typically although color processing is usually 3D, the hue and saturation may be largely maintained between input and output, i.e. the ratios of the color components, changing only the luminance, i.e. their common amplitude factor). To keep specification simple, the rest of the function can be determined automatically. E.g. segment of the darkest colors F_zer can be established by connecting the first control point with (0,0). For the uppermost segment one may e.g. select out of two options. This segment can continue with the slope of the F_diboos segment, yielding the F cont segment, or it can apply an additional relative boost with F boos to the very brightest colors, by connecting ADC output maximum (65535) to HDR image maximum (in this example the color composition director casu quo camera operator considering a 2000 nit ML_V HDR image being a good representation of the scenes of the shoot).

When moving to the next, outdoors position (again with the same basic capturing settings, in this example), determination of an optimal or desired second luminance allocation function Fs2 for this simpler mainly sunlit with shadows environment can be done faster and easier with only two control points (the third being implicit, i.e. not requiring user interaction, being positioned on the maximum of both axes). Now, as shown in the bottom graph of Fig. 7, the houses have e.g. a somewhat lower scene luminance ergo digital number, because a cloud has moved in front of the sun. In principle the present technologies can determine separate (extra) luminance allocation functions (and typically if desired secondary grading functions) also for these illumination situations (despite being at an existing position), but the idea is that in this approach this is not necessarily needed, since when well configured the lower values will scale nicely, showing a darkening which really occurred in the scene as a reasonable corresponding darkening in the output images, and their ultimate displaying (e.g. after a standardized display adaptation algorithm). In this scene, the color composition director may focus on two aspects of the grading(s). Firstly, we want a good value for the houses in the shadow. Since it are outdoors objects, those houses may be chosen brighter in the 2000 nit master HDR grading output than the indoors strongly lit portrait, so e.g. at 300 nit (on average). So they look about 200 nit darker than the houses when sunlit, and when seen from an indoors environment. Of course, in principle the director can decide to put more emphasis on the brightness of the portrait, and could even grade that part of the scene with a locally different function. But, although not per se excluded, such complicated grading would be atypical, at least for the primary grading output (for a fast and easy camera capturing optimization system). Although already graded in that the master e.g. 2000 nit HDR output video puts all object luminances in a position that is reasonable for HDR home viewing, there is typically still a relatively simple relationship with the relative brightnesses as captured in the digital numbers of the camera. So if 1000 DV is lower than 25000 DV, whichever function is chosen the output nit value will also be lower, since the functions will be strictly increasing. Secondary gradings could in principle contain image-location-dependent mappings, although in practice it has been proven that for single image-source material (no mixing of different images), a single function for all pixels in an image irrespective their location normally suffices. Note that the director can select the function for the second position by itself, i.e. independently, but it may be advantageous if the image color composition analysis circuit 250 has a circuit for presenting several, at least two, position-based grading situations. E.g., it may send to the display 253 a split view, where one can position a rectangle of half the image width over the captured master capturing RW of a previous position, to compare luminances of various objects in the grading of the present position. E.g., the director can first select the right side of the indoors scene of Fig. 4, to compare the brightness appearance of the indoors objects of the fireplace, portrait, plant and walls, with the ground and houses and sky of the outdoors second position capturing, to judge whether e.g. the viewer would not be startled when quickly switching from a first position shot to a second position shot, in case the video later gets re-cut. Then he can shift and swap so that he can compare the brightness of the outdoor houses seen through the window in the indoors scene, with the outdoor houses and objects in outdoors shots. Note that if he also wants to compare indoors object luminance levels both in indoors and outdoors shots, then when using only one master capturing RW per position (instead of a few), he should ideally make sure he also gets some of the indoors objects in view (or he can mix a few of the outdoors capturing different objects in the half screen for comparing outdoors objects, with the indoors objects in the other half). In this example, we can have e.g. the stool which is somewhere in the corridor. It will get a luminance depending on what lighting is present in the corridor, and what time of year it is outside (e.g. summertime may have stronger sunlight). Let's say the director wants those indoors objects seen from outside to look dark, but sufficiently well visible, which can be achieved by positioning them at e.g. 15 nit. This fixes the elected F_diboos segment of the second luminance mapping function FS2. The other two segments F_zer2 and F_boos2 can be automatically obtained by connecting the respective control point to the respective extremity of the ranges. If that function works sufficiently well for the director, i.e. creates good looking graded images, he need not further finetune it (e.g. by adding a tertiary control point), and can send it to the camera to store it in the function memory in the memory part of the second function.

It will often be enough to do re-gradings (both of the primary/master grading, and of secondary gradings) with two, or maybe three control points, although the method or system can allow the director to choose as fine a function as he desires, by continuing to add further control points to change the shape of the function(s). Also, it will often be enough to have only a few, even only two locations. One may e.g. create a "rough" grading situation which is sufficiently good for all brighter lighting environments (e.g. for all outdoors positions, irrespective of whether in an open area fully sunlit, or in a shadowy area between e.g. tall buildings), and a secondary one for all positions which are substantially darker, e.g. all indoors positions (which can be approximately 100× darker in the real scene, but need some adjusted grading anyway, which typically conveys somewhat of the relative darkening so the end-viewer can see -in all gradings ideally- some difference with the outdoors brighter capturings, but on the other hand both positions produce graded images in which all or most of the objects are well visible (i.e. not too dark and hidden, nor clipping), and ideally of well-coordinated brightness and color.

This initialization approach creates a technically much better operating camera, or camera-based capturing system. When starting the shoot, the user can focus on other aspects than the color and brightness distribution or composition, but still colorimetry has not been reduced to a very simple technical formulation, but now one can work with an advanced formulation which does allow for the desiderata of the human video creator, but in a simple short initialization pass.

Advantageously the method of in a video camera (201) setting a video camera capturing mode further comprises:

- determining by the color composition director for the at least two positions two respective secondary grading functions (FsL1, FsL2) for calculating from the respective master capturing (RW) or luminances of the first graded image a corresponding second graded image (ImRDR); and
- storing the secondary grading functions (FsL1, FsL2), or parameters uniquely defining these functions, in a memory (220) of the camera,
- wherein the second graded image (ImRDR) has a lower maximum luminance than the first graded image.

Some cameras need to output, for a dedicated broadcast e.g., only one grading, e.g. some HDR grading (lets say with 1000 nit ML_V, of the target display associated with the video images), or a standard Standard Dynamic Range (a.k.a. LDR) output. Often it may be useful if the camera can output two gradings, and have them already immediately in the correct grading. It may further be useful if those are already in a format which relates those two gradings, e.g. applicant's SL_HDR format (as standardized in ETSI TS 103 433). This format can output -as to be communicated image for e.g. consumer broadcast or narrowcast- a video of SDR images, and functions for calculating from the corresponding SDR image a e.g. 1000 nit HDR image. These functions may correspond to the functions of the present method/system, as explained below. One of the advantages is that one can then supply two categories of customers of say a cable operator, the first category having legacy SDR television, and the second categories having purchased new HDR displays.

So one then will determine a secondary graded video, e.g. an SDR video if the primary graded video was e.g. 1000 nit HDR. The secondary grading functions (FsL1, FsL2) may work directly from the master capturing RW, i.e. from the digital numbers, or advantageously, map the luminances of the primary grading to the luminances of the secondary grading. In the second alternative, during the setup phase one will determine for each location (and possibly for some orientations) a representative first graded image of luminances for all image objects, and a representative second image of luminances for those image objects (i.e. collocated pixels), and one will per luminance of one of the images determine a corresponding luminance of the other one of the images. One will then use this function to calculate on-the-fly a luminance-to-luminance mapping to incoming pixels of any captured and first graded image during the shoot, to obtain as secondary output image the secondary graded image. This will all be performed substantially at the same time as shooting, by the image processing circuit 207.

Having such a configuration system for (/in) the camera, means one can later, during the actual shoot, operate the camera given this configuration. This is enabled by method of capturing high dynamic range video in a video camera, the video camera outputting at least one (and possibly two or more) graded high dynamic range image with its pixels having allocated luminances, the method comprising:

- applying the method of in a video camera (201) setting a video camera capturing mode as described above;
- determining a corresponding position of the at least two positions (Pos1, Pos2) for a current capturing position;
- loading the corresponding luminance allocation function (Fs1) for that position from memory (220) of the camera; and
- applying the luminance allocation function (Fs1) to map digital numbers of successive images being captured while capturing at the current position, to corresponding first graded images (ODR; ImHDR), and storing or outputting those images.

A corresponding position means that the camera operator (or another operator operating a second camera) will not stand exactly in the same position (or orientation) in the scene as was selected during the initialization. One must be able to shoot freely. It means that one is in the vicinity of the investigated and stored position, i.e. typically one is in the same lighting situation, e.g. in a same part of the scene. That can mean different things. Outdoors, under the same natural illumination, the whole world could be a set of corresponding positions, at least e.g. when the system is operated in a manner in which the color composition director has not elected to differentiate between different outdoors positions (e.g. when this technical role is actually taken up by the camera man, e.g. when the camera is being operated by and guiding a one person layman videographer). Indoors there can be more complicated illumination, because lamps can be everywhere, the rooms can have variable shapes, there can be light-blocking objects which give different shadows, etc. A good elucidation example is a shoot in which the director on purpose wants to shoot in one strongly lit room, one averagely lit room, and one dim room (which e.g. only gets indirect lighting through a half-open door from the adjacent averagely lit room). With the present camera (or system of apparatuses comprising a camera) one can then professionally and accurately according to desire coordinate the luminances in one or more gradings of all those rooms, and then liberally walk through them, e.g. following an actor. Even if he opens the door somewhat further, if the system was well initialize for darker corners in the darkest room, one will still get both SDR and HDR gradings of good quality. The various embodiments will have further technical elements in the camera to be able to quickly yet reliably decide in which position, i.e. lighting situation, one resides at each moment of the shoot.

A function can be stored in a data-structure together with a position information (and possibly other information relating to the function, e.g. a maximum luminance of the output range of luminances and/or an input range of luminances), which can take several coding forms. E.g., they may be labeled enumerated (position_1, position_2), or absolute, e.g. relating to GPS coordinates or other coordinates of a positioning system, and/or with semantic information which is useful for the operator (e.g. "basement", "center of hall facing music stage during play conditions", etc. This data format can be communicated to various devices, stored in the memory location to be used in various user interface applications, etc.

Advantageously the method is used in association with a camera (201) which comprises a user interaction device such as a double throw switch, to toggle through function memory locations of stored positions of different illumination in a shooting environment, which when pushed in one direction select the previous position in a chain of linearly linked positions and when pushed in opposite direction selects the next position. A double throw switch is a switch that one can move in (at least) two directions, and which operates a (different) functionality for those two directions. E.g., in practice it may be a small joystick etc., whatever the camera maker considers easily implementable, e.g. typically on the side, or back of the camera.

This is a simple and very fast method relying on the user to quickly select a position. E.g., and especially with only a few locations, which order is easy to memorize, the camera operator can flick the switch right before entering the indoors area. Some embodiments may use e.g. summarizing brightness measures which start applying the new function from the moment the device actually sees a first capturing where the number of photo-electrons has considerably gone down (respectively up), which means at that capturing time the operator has walked into the position of less lighting (e.g. stepped through the door, and has now covering from the ceiling, side walls etc.; or in a music performance turns from facing the stage to facing the audience behind, which may need foremost a change in the secondary luminance mapping function to create e.g. a SDR output feed). With a few images delay, advanced temporal adjustment of the luminances can be enabled, in case a smoother change is desirable (e.g. taking into account how fast the outdoors light is dimming due to geometrical configuration of the entrance, or just in general regarding how abrupt changes are allowed, but in general there were not be annoying variations anyway (the system advantageously may yet need not do better than the regulation times of classical auto-exposure aglorithms); see below regarding longer-range transitions of lighting situations, such as in a corridor).

Advantageously, the camera (201) comprises a speech recognition system to select a stored luminance allocation function or secondary grading function based on an associated description of a position, such as e.g. "living room". This allows the camera operator to have his hands free, which is useful if he e.g. wants to use them on composition, such as changing the angle of view of a zoom lens. Talking to the camera uses another part of the brain, so there is lesser interference with key tasks. In case of a (even slightly) re-cut capturing, the camera operator can stand still for a moment when selecting the new location, and those images with speech will be cut out of the final video production. However for real-time measures may be in place so that the whispering of the camera operator is hardly recordable by the main cameras, which can be realized e.g. by having a set of beamforming microphones trained on the camera operator, i.e. having an audio capturing lobe behind the camera (whereas the main microphone 523 will focus on the presenter or scene being acted in, i.e. mostly capture from the other side. Also other cameras in the scene can be positioned far enough from the whispering camera operator so that his voice is hardly recorded or at least not perceptible, and need not be filtered out by audio processing. The camera operator can train the whispered names of the locations whilst capturing the one or more high dynamic range images (o_ImHDR), and use well-differentiatable names (e.g. "shadowy area under the forest trees" being about the longest name one may want to use for quick and easy operation, "tree shadow" being better, if there are not too many positions needing elaborate description for differentiation, e.g. "tree border", or "forest edge" being another possible position where say half a hemisphere is dark and the other half brightly illuminating).

In systems or situations where that is not possible, other techniques (embodiments) can be used.

Advantageously the method (/system) uses some location beacons which can either be fixed in locations which are often used (like a studio) or hung up before the shoot (e.g. in a person's home which was scouted as an interesting decor), which may be simple beacons which e.g. give three different ultrasound sequences, or microwave electromagnetic pulse sequences to identify, starting e.g. on the second, and the camera (201) comprises a location determination circuit, such as based on triangulation. There may be also one beacon per position, and then when they are suitably placed the camera can detect from the arrival time after one second on the clock, which beacon is closer. Or the camera may emit its own signal to the beacon and await a return signal, etc.

One can also stick quickly flashing patterns of leds on the ceiling. If they are infrared, and the camera has separate infrared detection, it doesn't even matter whether they come in view (if the video sensor blocks IR). The pattern can identify the room, or a sub-area of the room etc.

The camera (201) may alternatively (or in addition) also comprise a location identification system based on analysis of a respective captured image in a vicinity of each of the at least two positions. Monitoring the amount of light at each position may be quite useful. An automaton can itself detect whether some measure of light summarizing the situation has sufficiently changed, or has come close to a situation for a position. In some situations (e.g. with complexly varying lighting, like in a discotheque or explosions etc.), one may want to rely on geometrical recognition of color (texture) patches. E.g. a red couch, or rectangular shape against a green wallpaper may be recognized, as existing in one room, but not e.g. outside. In areas where one often shoots this can be accurately trained. When doing a fast initialization, this information can still be quickly collected by the camera (as explained below). It often provides for a robust identification of the room. The advantage of this technique is that a good quality imaging sensor is already available, and possibly some image processing capability (which may be re-used for other purposes too). A disadvantage is that the more complex algorithms may need a dedicated processor or significant additional processing functionality and power to existing typical camera image processing functionality, but ICs are still becoming more powerful year upon year, so for some future cameras this may be an option (e.g. in a mobile phone, which is becoming a powerful computer anyway).

The present innovative concepts, although also quite useful for on-the-fly single camera capturing, may become even more useful and powerful for multi-camera shoots. It is advantageous if a method of in a <u>secondary</u> video camera (402) setting a video camera capturing mode of specifying output pixel luminances in one or more graded versions of output video sequences of images, comprising setting in a first video camera (401) a video camera capturing mode of specifying output pixel luminances in one or more graded versions of output video sequences of images, and communicating between the camera to copy a group of settings, including the iris setting, shutter time setting and analog gain setting, and any of the determined luminance allocation functions from memory of the first camera to memory of the second camera.

So e.g. a first camera man can with his camera discover the scene, and generate typical functions for several positions of interesting lighting in the scene. He can then download those settings to other camera men, just before starting the actual shoot. It may be advantageous if all cameras are of the same type (i.e. same manufacturer, and version), but the approach can also be used with differently behaving cameras, if some extra measurements are taken, ideally. E.g. if a second camera has a sensor with lesser dynamic range, e.g. it gets 20,000 pixels full well and gets in the noise already at 50 pixels, and can still set its behavior for e.g. the flames in the room in relation to pixel overflow. Of course this camera will then yield noisy blacks (however the brights of the video are already well aligned), but that could be solved by using an extra post-processing luminance mapping function which darkens the darkest luminances somewhat, and/or denoising etc. If one must work with cameras which really deviate a lot (e.g. a cheap camera to be destroyed during the shoot), one can always use the present method twice, with two camera operators independently discovering the scene with the two most different cameras (and other cameras may then copy functions and basic capturing settings based on how close they are to the best respectively worst camera).

Advantageously the method of in a secondary video camera (402) setting a video camera capturing mode has one of the first video camera and the second camera which is a static camera with a fixed position in a part of the shooting environment, the other camera being a moveable camera, and either copying the luminance allocation function for the position of the static camera into a corresponding function memory of the movable camera, or copying the luminance allocation function in the movable camera for the position of the static camera from the corresponding function memory of the moveable camera to memory of the static camera.

This can be in a classical setup for e.g. studio broadcasting (i.e. studio camera; but it could also be a static camera in field production of e.g. a sports event), in which some cameras are positioned at convenient places on the studio floor in front of the decor (set, scenic design), e.g. to capture parts of the set, or speakers from different directions, but also e.g. a fixed camera can be attached to the ceiling of a room during a movie shoot for a birds eye view, etc. If that static camera has all, or the most relevant, object in view of e.g. the living room with adjacent kitchen (which may be considered a single free range environment for the actors), one can copy the function of the static camera to the dynamic cameras that may also come in to shoot there (or at least a part of the function of the static camera is copied, e.g. if everything but the kitchen window is determined by the static camera, that part of the e.g. secondary grading curve may already form the first part of a curve for a dynamic camera, but it may still itself determine the upper part of the luminance mapping function corresponding to the world outside the window 410, etc.). Vice versa, a dynamic camera operator (which role may be performed either by the color composition director when loading determined functions to one or more cameras, or by a camera operator when copying at least one function from his camera) may walk past some static camera and copy at least one suitable function into it (and typically also basic capturing settings, like an iris setting etc.). In a more advanced system the static camera may rotate, and then e.g. two functions may be copied, one useful for filming in the direction of the kitchen (which will or may contain outdoors pixels), and one for filming in the direction of the hearth). This may either be done automatically, by adding a universal direction code (e.g. based on the compass) to a function data structure, and then the static camera can decide for itself what to use in which situation, e.g. by dividing the angles based on which side from a direction in the middle of the two reference angles the static camera is currently pointing to, or it may be indicated to the static camera what to use specifically under which conditions by the camera operator via user interface software (e.g. the standard camera may communicate its operation menu to the dynamic camera, so the operator can program the static camera by looking at options on the display of the dynamic camera).

One advantageous manner of embodying the innovative concepts is in a multi-apparatus system (200) for configuring a video camera, comprising:

- a video camera (201) for which to set a capturing mode of specifying output pixel luminances in one or more graded versions of output video sequences of images to be output by the video camera to a memory (208) or communication system (209),
- wherein the camera comprises a location capturing user interface (209) arranged to enable an operator of the video camera to move to at least two positions (Pos1, Pos2) in a scene which have a different illumination compared to each other, and to capture at least one high dynamic range image (o_ImHDR) for each position which is selected via the location capturing user interface (209) to be a respresentative master HDR capturing for each location;
- an image color composition analysis circuit (250) arranged to receive the respective at least one high dynamic range image (o_ImHDR) and to enable a color composition director to analyze the at least one high dynamic range image (o_ImHDR), to determine
- a) a region of maximum brightness of the image, and based thereupon at least one of an iris setting, a shutter time, and an analog gain setting for the camera and
- b) via a function determination circuit (251) for at least a respective first graded image (ODR) corresponding to the respective master capturing, a respective luminance allocation function (FL_M) of digital numbers of the master capturing to nit values of the first graded image (ODR) for the at least two positions; and
- wherein the camera comprises a functions memory (220) for storing the respective luminance allocation functions (Fs1, Fs2) for the at least two positions, or parameters uniquely defining these functions, as determined by and received from the image color composition analysis circuit (250).

Instead of all components residing in a single camera (which is i.a. good for ultimate portability, if e.g. a one man team wants to explore an environment e.g. in a Urbex shoot), it may be advantageous if some of the features reside in e.g. a personal computer. These have on the one hand the benefit a general significant amount of computing power, with the possibility of installing various software components, but on the other hand one may connect a larger better quality grading monitor, and may more easily shield it from surround light (or even put it in a dedicated darkened grading booth quickly built up along the scene, or in an OB truck). Capturing mode may in general mean how to capture images, but in this patent application specifically points also to how the capturing is output, i.e. which kind of e.g. 1000 nit HDR videos are output (whether the darkest objects in the scene are represented somewhat brighter or vice versa kept nicely dark e.g.). I.e. it involves a possibility of roughly or precisely specifying -for all possible object luminances that one could see occurring in the captured scene-corresponding grading-optimized luminances in at least one output graded video. Of course one may want to output several different graded (and typically differently coded, e.g. Perceptual Quantizer versus Rec. 709 etc.) videos, for different dynamic range uses. Thereto the camera needs new circuitry to enable its operator to walk to some environment of representative lighting, and specify this, by using a capturing user interface 210 for specifying the initialization capturing and all data from the camera side (the image color composition analysis circuit 250 residing e.g. in the personal computer, may operate with a third user interface, the mapping selection user interface 252, with which the color composition director may specify the various mappings, i.e. shift e.g. control points as explained with Fig. 7). On the one hand he will capture a representative image there (a good capturing being typically the master capturing RW), and on the other hand he will specify, at least by minimal data such as an order number (e.g. location nr. 3), but possibly with more information, such as semantic information that can later be used more easily in the various embodiments of the selection user interface. This needs to be managed by operation software of the capturing UI, since the end result is to have on the one hand basic capturing settings (iris etc.) for the camera to later operate in this lighting environment, and on the other hand functions, to be able to calculate, starting basically from a raw capturing of digital numbers, the various graded videos and their pixel luminances. This needs to be managed to be stored in corresponding positions of a functions memory 220 (n.b. the basic capturing settings may also be stored there, or in some other memory). From there onwards any of the originally captured images from the initialization phase have become irrelevant, and all information is in the stored basic capturing settings and functions, and the camera is ready for the actual shoot (i.e. the recording of the real talk show, or shoot of a part of a movie, etc.). The user interface which then becomes important is the selection user interface (230), with which the camera operator can quickly indicate to which location-dependent setting the camera should switch.

Useful embodiments of the system for configuring at least one video camera (200) will have a function determination circuit (251) which is arranged to enable the color composition director to determine for the at least two positions two respective secondary grading functions (FsL1, FsL2) for calculating from the respective master capturing (RW) or the first graded image (ODR) a corresponding second graded image (ImRDR), and the camera (201) being arranged to store in memory for future capturing those secondary grading functions (FsL1, FsL2).

A typical secondary grading for any high dynamic range primary graded video is an SDR graded video, but a secondary HDR video of lower or higher ML_V is also possible. The innovative camera will at least have the memories for these various functions, and the management thereof, and in particular during operation the selection of the appropriate function(s) for producing high quality graded video output. The innovative part in the computer, or running in a separate window on a mobile phone (primary which also functions as camera, or secondary which doesn't function as camera) etc. , will apart from the correct communication with the camera for the various positions have the setting capabilities including user interface typically (unless the system works fully automatically) of the appropriate settings and functions for the camera.

So the novel camera either itself comprises a system for setting a video camera capturing mode of specifying output pixel luminances in one or more graded versions of output video sequences of images, or is configured to operate in a such system by communicating e.g. a number of HDR capturings to a personal computer and receiving and storing in respective memory locations corresponding luminance mapping functions, and the camera has a selection user interface (230) arranged to select from memory a luminance mapping function or secondary grading function corresponding to a capturing position.

Various useful embodiments of the novel camera may be inter alia (the various devices of interaction being potentially combined in high end camera, for selectable operation or higher reliability):
A camera comprising a user interaction device such as a double throw switch (249), to toggle through function memory locations of stored positions of different illumination in a shooting environment, which when pushed in one direction select the previous position in a chain of linearly linked positions and when pushed in opposite direction selects the next position.

A camera (201) comprising a speech recognition system, and preferably a multi-microphone beam former system directed towards the camera operator, to select a stored luminance allocation function or secondary grading function based on an associated description of a position, such as e.g. "living room".

A camera (201) comprising a location and/or orientation determination circuit, such as the location determination being based on triangulation with a positioning system placed in a region of space around the at least two positions, and such as the orientation determining circuit being connectable to a compass.

A camera (201) as claimed in claim 12, 13, 14 or 15 comprising a location identification system based on analysis of a respective captured image in a vicinity of each of the at least two positions.

This camera will typically identify various colored shapes in the different locations, based on elementary image filtering operation such as edge detection and feature integration into clearly distinguishing higher level patterns. Various image analysis versions are possible, of which we elucidate a few below in the section on the details of the figure-based teachings.

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, but hidden in the interior of an object, or for intangible things such as e.g. selections of objects/regions (and how they may be shown on a display).

In the drawings:

Fig. 1 (in Fig. 1A) schematically illustrates on the one hand how one or more camera operators can shoot in positions of various lighting condition, and according to the invention can investigate these positions to obtain corresponding good shooting conditions of the camera, i.e. a mode of specifying as desired for each location optimal values for various luminances that objects can have in the scene as represented in at least one output graded video. Fig. 1B also shows how one can can derive a better secondary graded output video (RDR) compared to simple technical formulation of lumas or luminances in an output video. Fig. 1C shows the same in a two dimensional graph, so that one can see better e.g. the concept of desired brightening of dark scene and consequently dark image objects;

With Fig. 2 we elucidate with typical generic components (related to roles of humans operating the various apparatuses) what the total system will typically do generically to come to a technically improved camera (201) ready to automatically use in such quite differing lighting environments as exemplified in Fig. 1; two separate apparatuses are shown, but the functionality of both can also reside in a single camera;

Fig. 3 shows more in detail how there can be several manners of creating an output video graded to a video maximum luminance of e.g. 700 nit, some methods being better and some being less appropriate, the better ones being what the present method, system, and apparatuses in particular novel camera cater for;

Fig. 4 is an example of a complex indoors lighting environment for explaining some concepts relating to one camera shooting at several positions or several cameras shooting at several positions, and also the potential influence of orientation at any position, which may also be taken into account in more advanced embodiments of our present innovation (the cameras shown can be the same camera operated at different times, or different cameras operated at the same time);

Fig. 5 illustrates a more advanced camera, with the location-dependent function creating circuitry and/or software integrated, and also some possible further circuitry for selecting the appropriate location-dependent function during any actual shoot, as well as an embodiment of a display in spectacles to be able to reasonably select the functions on the spot;

Fig. 6 is introduced to teach some elucidation examples of a user interface to define a luminance mapping function for creating a primary grading from the digital numbers of any raw captured video image;

Fig. 7 teaches some further insights on exemplary shapes of functions for a two-position shoot example (indoors versus outdoors), which is to be represented as a continuous video output being a 2000 nit ML_V HDR graded output video;

Fig. 8 is introduce to show how one can grade a secondary e.g. SDR grading when having made as a starting point a primary 2000 nit HDR grading; and

Fig. 9 is introduced to schematically show an example of how a camera can detect a location by identifying certain patterns of color due to specific discriminating objects being present in one or more locations.

## DETAILED DESCRIPTION OF THE EMBODIMENTS

**Fig. 1A** shows an example where a (conceptual) first camera man 150 and second camera man 151 can shoot in different positions (this can be the same actual camera man shooting at different times, or two actual camera men shooting in parallel, with cameras initialized and settings-copied as per the present innovations). An outdoors environment 101 may be quite differently lit for various reasons, namely both the level of illumination and the spread of illumination (e.g. one sun which falls on objects everywhere with the same angle in view of its distance, or a uniform illumination from an overcast sky), or equidistance light poles (113) etc. During nighttime the outdoors will typically be much darker (and contrasty, i.e. higher dynamic range) than indoors shooting, and during daytime it will typically be the other way around. Representative objects (which must get a reasonable luminance in the at least one graded output video) for the outdoors in this scene may e.g. be the house 110. Another critical object for which to monitor the output luminance are the bushes in the shadow 114. During daytime the street light elliptical area may have a similar luminance as the house, due to the reflection of daylight on the cover, but during nighttime day may be the brightest object (so much brighter in the scene that one may want dim their relative extra brightness, e.g. as a ratio to the brightness of an averagely lit object, in the graded output video so that they do not become too conspicuous or annoying in the ready to view grading).

Indoors objects, such as the plant 111, (or the stool 112), may have various luminances, depending not only on how many lights are illuminating the room, but also where they are hanging and where the object is positioned. But in general the level of lighting may be about 100 times less than outdoors (at least when there is sunny summer weather outdoors, since during stormy winter shoots some of the indoors objects may actually have a higher luminance than some outdoors objects).

Advanced embodiments of the present system may make use of variable definition of location-dependent functions (and camera settings). For the basic embodiments, the idea is that it is sufficient to have one set of settings data (iris etc.; at least one luminance mapping function) for each position. In some advanced situation the director may select e.g. 2 functions, and perform various possible tasks. E.g. when in position nr. 1, the camera operator may still select between function 1, or alternative function 2, and deciding on the fly which function works best. This may be both useful when the functions realize small variations -i.e. have slightly differing shape- or large variations. It may be used to account for further variability in the position of the shooting environment, e.g. in a steam bath there may be more or less mist. Also, having an alternative function for a positions allows over-writing. E.g. the color composition director may have selected two possible functions for the outdoors position, but at initialization not yet know which one works better during the shoot. The camera operator or the color composition (CC) director, or the camera operator in cooperation with the CC director may e.g. decide to swap the first version, which is currently loaded in primary memory for that position, and is the function which is selected by using the switch to toggle to this shooting position, may be swapped with the alternative function, which going forward becomes the primary function for this position for the selection UI. Or, the CC director may even finetune a function for a position, and load that one in primary position for the remainder of the shoot, making this the new fine-tuned on the fly grading behavior for this position (usually this should be done for small changes and moderation). Another typical example which can be classified under the category of (at least) two functions per (generalized) position is a corridor 102. Such long and narrow environments can have different lighting at various positions along the corridor. Of course one could treat those according to the basic system as just three different shooting positions (not really minding any relationship), but it is better to group them together in a generalized position, or group of positions. E.g., if the corridor is only lit by outdoors lighting from the front, it will gradually darken, but at a certain position there may also be lamps 109 on the ceiling, which will locally brighten again (and may be in view, so may be an separate object with pixel luminances than may need to be accounted for in the functions, and possibly the basic capturing settings).

E.g., the CC director may have decided together with the camera operator that a good first position of first representative lighting is near the entrance of the corridor (e.g. 1 meter behind the door and facing inwards if the shoot is going to follow an actor walking in), and a second representative position is a little before where the lamps hang (so we get some illumination from them, but not the maximum illuminance). During the shoot the camera can then behave e.g. like this. The camera operator flicks the switch to indicate he will be travelling/walking from the entrance position to the lamp-lit position in the corridor (a type of position, or function, can be co-stored for such advanced behavior, such as "gradual lighting", or "travelling"). The camera during creation of the at least one output graded video, e.g. a HDR version, can then use a continuously adjusted function between the two functions. The amount of adjustment, i.e. how far the to be used function has deviated from the entrance position function to the lamp-lit position function, can determine e.g. on where exactly the operator stands in the corridor, if the positioning embodiment allows for this (other possibilities, if delay allows for this, but oftentimes one wants delays in the order of 1 second for life production, but this could be done in offline production, is to first use for too many images the first function, but then when arriving at the second position correcting half of the previous image with gradual functions).

These concepts can be better illustrated with Figs. 1B and 1C.

**Fig. 1B** shows how one might roughly want to map from a first representation of the image (PQ), e.g. a first grading, to a second (typically lower) dynamic range grading (RDR). Typically, in relatively simple HDR shoots, one would get some straightforward positions in the first representation, which are e.g. related to the raw capturing. E.g., one may set the luminances in this first representation equal to the digital numbers multiplied by a constant. Let's say the constant is such, that e.g. the largest digital number (e.g. power(2; 14)) gets mapped to 4000 nit. All objects will then fall on luminance positions (brighter or darker, along the vertical axis of all possible luminances between 0 and 4000 nit) depending on what luminances the objects had in the scene. This may in many occasions be reasonably good for a primary output of a video camera, for a "master HDR video", though it is not necessarily the best primary graded output video (i.e. ImHDR). The issue of following video production simple rules may become more problematic when creating a video of lower dynamic range. The dotted luminance mapping lines represent a simple function (F1) such as e.g. a gamma-log function (which is a function which starts out shaped as a power law for the darker luminances of the HDR input, and then becomes logarithmic in shape for mapping the brighter input luminances to fit into a smaller range of output luminances). A problem with such mappings is that in general they will not do a good job of mapping to a smaller dynamic range, e.g. SDR. The best looking images come out when a human (or at least an automaton which can calculate more advanced functions for each shot or lighting scenario) creates an optimally shaped luminance mapping function Fopt. E.g. the plant shot indoors may be mapped too dark with a gamma-log function, so we want a shape that brightens more for the darkest image objects. That can be seen in **Fig. 1C,** which shows the same in a 2D plot instead of on two 1D luminance axis (and for luminances normalized to a maximum of 1.0): the solid curve lies higher than the dotted one, and boosts pixel luminance as in the output image more, especially for the darkest objects. One may do further shape fine-tuning, e.g. dimming the luminances of the houses, so that a desired inter-object contrast DEL is achieved.

Although this Fig. 1C elucidates general principles, it can also elucidate how a gradual change in function may be calculated by the camera: if the dotted curve is good for the first position in the corridor, and the solid one for the second position, for in-between positions the camera may use of function shape which lies between those two functions. Several algorithms can be used to control the amount of deviation, as a function of traveled distance towards the second position (often perfect luminance determination is secondary to visually smoothened appearance).

**Fig. 2** shows conceptually parts of a camera, and the rest of possible apparatuses in the initialization/mode setting system, for elucidating aspects of the new approach (the skilled person can understand which elements can work in which combinations or separately, or be realized by other equivalent embodiments).

The first, basic part of the camera was already described above, so we describe some further typical elements for the present new technical approach.

The capturing user interface 210 will cooperate with further control algorithms, which may e.g. run on control processor 241 (which processor that is depends on what type of camera, e.g. slowly replaced professional cameras, or quickly evolving mobile phones, etc.). It will at least manage the management of which position is being captured, what must be communicated to the exterior apparatus containing the image color composition analysis circuit 250, what is expected to be received back (e.g. a luminance mapping function Fs2, communicated in a signal S_Fs, and maintaining in which memory location this function for e.g. the second position should be stored. Although at least some or all the functionality may be integrated in another similar circuitry, we assume the camera has a dedicated communication circuitry 240.

E.g., lets assume that both the at least one high dynamic range image (o_ImHDR) is output via this communication circuitry 240, as well as the basic capturing settings and the mapping functions are received i.e. input via this circuitry (the camera may further communicate via a dedicated cable to the lens, etc., but such details are irrelevant for understanding the present innovation).

Let's further assume that the connection is IP-based, and over WiFi, either with MIMO antenna 242 connected to the camera, or a USB to wifi adapter (other similar technologies can be understood, e.g. using 5G cellular, cable-based LAN, etc.). If a single, or a few images are sent, one does not need an error-resilient communication protocol like Secure Reliable Transport or Zixi, but if the functionality is doubled from a Wifi communication which also communicates all images of the actual shoot, that may be useful.

Note also that for determining luminance mapping functions for grading, the received images need not be of the highest quality, e.g. resolution, and there may be compression artifacts. The actual shoot video output, which is delivered by the image processor 207 as ImHDR video images (and possibly in addition also ImRDR video images), may in many applications also already directly compressed, e.g. by using HEVC or VVC, or AV1 to a sink which desires AV1 coding, but some applications/users may desire an uncompressed (though graded) video output, to e.g. an SD card embodiment of video memory 208, or straight out over some communication system (NETW).

So with the aid of the image color composition analysis circuit 250, and via the mapping selection user interface 252, the CC director can watch on a monitoring display 253 what the gradings look like, either roughly (with the wrong colors) or graded. E.g. there may be a view showing LDR colors that result, when changing on the fly the shape of the secondary grading function FsL1, via the control points, and there may also be a second view showing a brighter HDR image, or just the LDR image alone. Some elucidation examples are given in the further figures.

The function determination circuit (251) may already give a first automatic suggestion for the luminance mapping function, or the secondary grading function, by doing automatic image analysis of the scene. The CC director may then via the UI fine-tune this function, or do everything himself starting from the master capturing RW or at least one HDR image. Applicant has developed autometa algorithms for e.g. mapping any HDR input image (e.g. with ML_V equal to 1000 nit, or 4000 nit) to e.g. typically an SDR output (RDR embodiment) image. The resultant luminance mapping function (functioning here as secondary regrading function) depends on the scene. For camera capturing the function shape would essentially depend on the lighting situation at any position. The final result is an output from the function determination circuit 251 of an optimized function (e.g. Fs1), communicated in a signal format S_Fs, which codifies the function e.g. with a number of parameters uniquely defining the shape.

An example with well-working functions, which can work both for establishing the primary (e.g. 2000 nit ML_V HDR output video), and a secondary graded e.g. 200 nit video, is shown in **Fig. 6.**

These images show both the underlying technical principles, but may also be actual views in three sub-windows on display 253.

Let's say the mapping from digital numbers (DIG_IN) -which we have again for simplicity normalized to 1.0- to a 2000 nit output HDR video, consists of two sequential mappings. First one can set a coarse mapping RC (in coarse mapping view 620), with say two linear segments at the outer ends (bright and dark input digital numbers), and a smooth segment in-between. The location of the three segments can be determined by setting arrows 628 and 629. This can happen, depending on which apparatus is used, e.g. by mouse dragging on a computer, or pen-clicking on a touch-sensitive screen connected to the camera, etc. The arrows can also (at least initially, before human finetuning) be set by e.g. clicking with the user's finger 611 on an object of interest OOI in a view of the e.g. master capturing, in image view 610, e.g. on the flames. The span of digital numbers (or luminances if the same algorithm is used to map from the luminances being input of the primary graded video ImHDR to the output luminances of the secondary graded video ImRDR) will be represented by the upper and lower arrow (i.e. a positioning of arrows 628 and 629). This may also fall on a part of the middle segment, if e.g. the autometa determined the three segments. The view of the coarse mapping 620 may also show small copies of the selected area, i.e. the fireplace, as copied object of interest OOIC, in a view of correctly value-positioned interesting objects 625. The CC director can toggle through, or continuously move through, a number of possible slopes (B1, B2) for the linear segments of the darker colors, starting from segment 621 which still grades those objects relatively dark, to arrive at his optimal segment 622, grading them brighter in the primary HDR output (ImHDR). This may be nice for the darkest objects, but perhaps the other critical object, the fireplace, when ends at a certain offset OF_i and a certain span of luminances DCON_i, or intra-object contrast, may not yet be optimal by such a coarse grading strategy.

Therefore, in a tertiary view window 630, the CC director may finetune the 2000-nit ranged luminances resulting from the coarse grading, to obtain better graded 2000 nit luminances, for the final output (the function to load to the camera will then be the composition function F2(F1(DN)).

The UI can already position the arrows (copied arrows 638 and 639 to correct new positions, the horizontal positions in the view 630 corresponding to the vertical axis positions in view 620), a second copied object of interest OOIC2 etc. to the correct new positions in the graph. E.g., a simple algorithm to adjust the contrast of the flames in to anchor the upper coarse graded luminance of the range of flames luminances (this becomes anchor Anch), and repetitively flick a button, or drag a mouse, to increase the slope of the segment below to a higher angle than the diagonal, so that at the bottom luminance of the range of flame luminances an offset DCO from the diagonal is reached. This creates a customizable second grading curve (CC), which yields in the final output 2000 nit grading (oHDR fi) a larger contrast range DCON_fi than the DCON i of the intermediate 2000 nit grading (oHDR im).

Finally (returning to Fig. 2) in actual shoot operation, the image processing circuit 207 fetches the appropriate functions D_SEL e.g. Fs1, and if needed corresponding FsL1 of the secondary RDR grading, from memory, and starts applying it to the captured images as long as the shoot is being shot at that position (or actually in the vicinity of that position, as determined by camera operator or an automatic algorithm), until the shoot arrives at a new position. The setting of the iris and shutter may need to be done perhaps only one time right before starting the shoot, by means of iris signal S_ir, and shutter signal S_sh, originating e.g. from the camera's control processor, or passing through the communication circuitry, etc.

As regards the signal format of the HDR output, and possibly the RDR output, a typical useful format may be Perceptual Quantizer EOTF (standardized in SMPTE 2084), for determining the non-linear R'G'B' color components, and then e.g. a rec. 2020-based Y'CbCr matrixing. And then e.g. VVC compression, or keeping an uncompressed signal coding, etc. In case the secondary output is supposed to be legacy SDR, it can use Rec. 709 format.

So the output video signal of any camera embodiment according to the present technical teachings will typically apply the first luminance mapping functions (Fs 1, Fs2, ...), to yield for the first grading actual images (along some range of luminances up to some elected maximum ML_V of a target display associated with the video). I.e. each pixel has a luminance, which is typically encoded via an EOTF or OETF (typically perceptual quantizer, or Rec. 709). The secondary grading may also be added to the video output signal if so desired, but typically that will be encoded as functions (e.g. the secondary grading functions FsL1, FsL2 to calculate the secondary video images from the primary video images). Oftentimes the primary grading is a HDR grading and the secondary e.g. an SDR grading. But, e.g. for backwards compatible HDR broadcast, the primary grading may also be an SDR video, and the co-coded functions may be ;luminance upgrading functions to derive a HDR grading from the SDR graded video. In that scenario for full backwards compatibility the SDR luminances may be encoded according to the Rec. 709 OETF, but for partial backwards compatibility SDR luminances up to 100 nit may also be encoded as lumas according to the Perceptual Quantizer EOTF, etc.

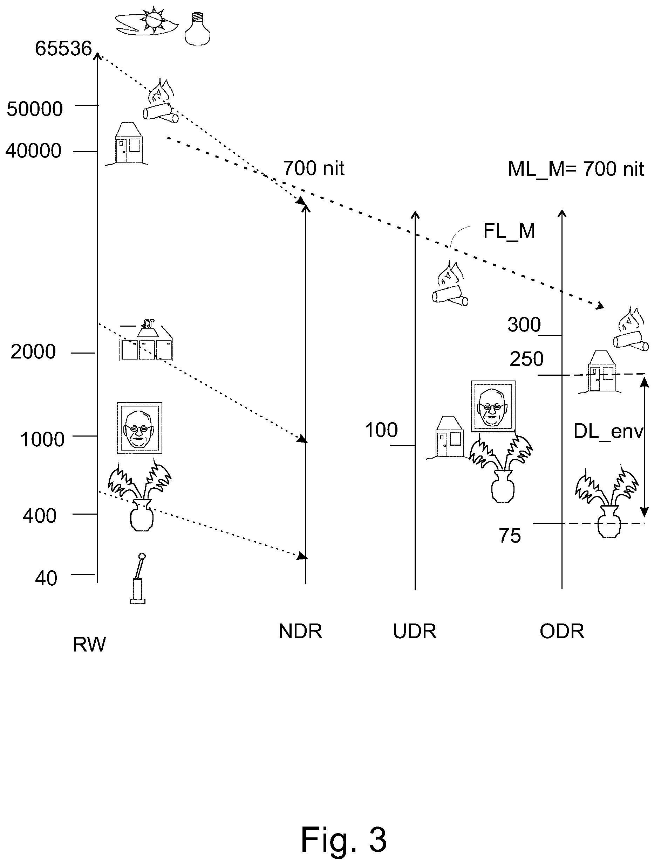

**Fig. 3** illustrates further what is typically different, i.e. what is achievable, with our innovative technology and method of working, compared to some more simple approaches that one could apply, but which are of lesser visual quality.

Assume the camera operator has already established a reasonable capturing of the scene, which is shown on the leftmost vertical axis. One could now make a 700 nit ML_V primary grading in three different manners (three different technical philosophies).

A first representation of the 700 nit image (NDR) can be formulated by mapping the maximum possible digital number of the camera (i.e. the maximum value of the ADC), to the maximum of the grading, which in the election of this example is 700 nit. All other image luminances will then scale proportionally. This might be good if the capturing is to function as some version of a raw capturing, e.g. for offline later grading like in the movie production industry, but it will not typically yield a good straight-from-camera 700 nit grading (typically some objects will be uncomfortably dark). This is a situation one could achieve if one fixed all camera settings, i.e. basic capturing settings, and maybe a mapping function, once and for all, i.e. for the entire shoot, and the same for all positions.

Another possibility, which one may e.g. typically get when using some (potentially improved) variant of classical auto-exposure algorithms, which determine a new optimal exposure each time something changes in the lighting situation, is the second representation UDR. Now the usual objects, which will be the predominant luminance of most pixels, which will come out in an average-based exposure calculation, will put all diffusively reflecting objects on a same output image luminance position (seen on the luminance axis of all possible image luminances of the UDR image, the lit portrait coming out approximately as bright as the outdoor houses).

This is not what one ideally would want. One would want some difference in luminance DL_env, between the average object luminance in the stronger lit outdoors environment, and the indoors environment, and one may desire technology which enables a human to control this. This is shown in the third representation, which functions as our primary HDR grading (imHDR), with an elected master grading maximum luminance ML_M equal to 700 nit. The dashed arrow shows one luminance being mapped by optimal luminance mapping function FL_M, which would be the optimal luminance function stored in the camera for the indoors position capturing the flames, as explained in the other paragraphs of this application.

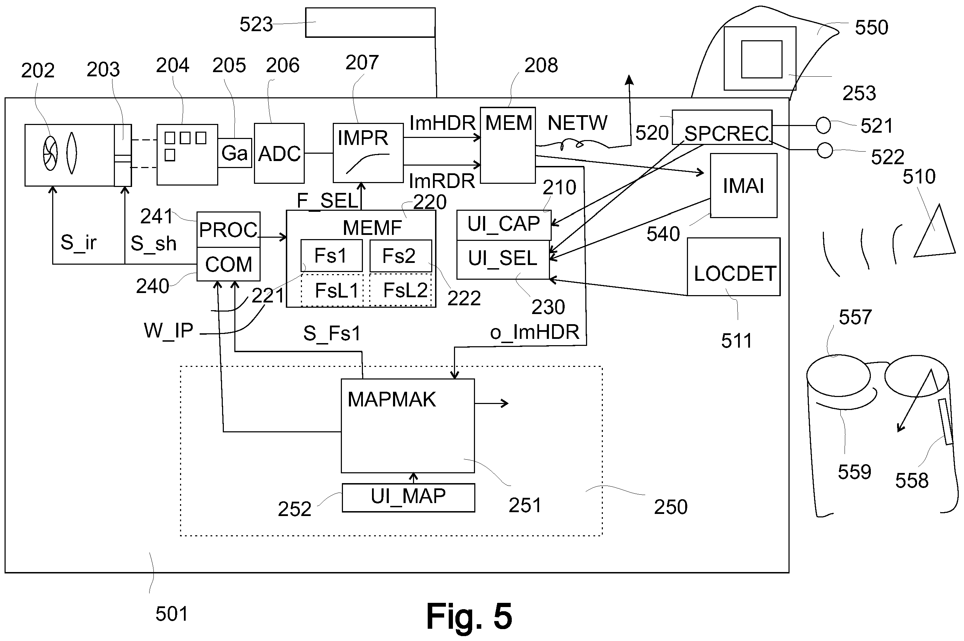

**Fig. 5** shows an elucidation of an advanced camera, which may have one or more position determining circuits. The basic parts (lens, sensor, image processing circuit) are similar to the other cameras. Here we show a viewfinder 550, on which the camera operator can see some views when functioning in the role of CC director. This may not be as ideal a view as in a separately constructed grading booth constructed adjacent to the shooting scene, or even in the production studio, but sometimes one has to live with constraints, e.g. when shooting solo in Africa without a final customer yet. Alternatively, for better resolution, surround shielding etc. the operator/CC director can for a short while put on spectacles 557, which may e.g. have projection means 558, and light shielding 559. What can be used is e.g. a vizor such as used in virtual reality viewing. What is also shown is speech recognition circuitry 520 or software, connected to at least two microphones (521, 522) forming an audio beamformer. The speech recognition need not be as complex as full speech recognition, since only a few location descriptions (e.g. "fireplace") need to be correctly and swiftly recognized. Whether the camera actually uses in-camera recognition algorithms, or uses its IP communication capabilities to let a cloud service or a computer in the production studio perform it is a detail beyond the needs of this application's description.

What is also shown is an external beacon 510. This can be a small IC with antenna in a small box that one can glue to a wall, etc. Beacons can offer triangulation, identification if they broadcast specific signal sequences, etc. It will interact with a location detection circuit 511 in the camera. This circuit will e.g. do the triangulation calculations. Or for coarser position determination it may simply determine whether it is in a room, e.g. based on recognition of a signal pattern, and maybe timing of a signal.

The video communication to the outside world via a network may e.g. be contribution to the final production studio (where the video feed(s) may be mixed with other video content e.g., and then broadcaster), or it may stream to cloud services, such as e.g. cloud storage for later use, or a youtube live channel, etc.

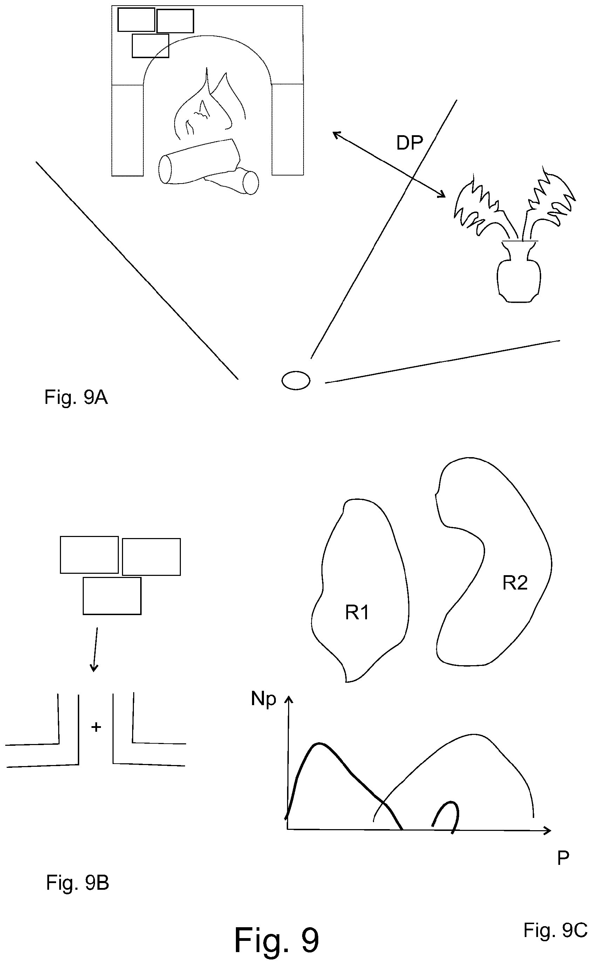

The image analysis circuit will be elucidated with Fig. 9. The idea of all these techniques is that during the life shoot position-dependent behavior of the camera still makes it easy to operate. For some shoots there is a focus puller who could e.g. via an extra small display timely select the shooting locations just before changing focus, but in some situations the camera man must do it all (and is already quite occupied following e.g. fast moving people or action), so it is good if he can rely on, or at least be aided by a number of technical circuits to determine position information (and the higher amount of work is done during the initialization phase of the scene discovery).

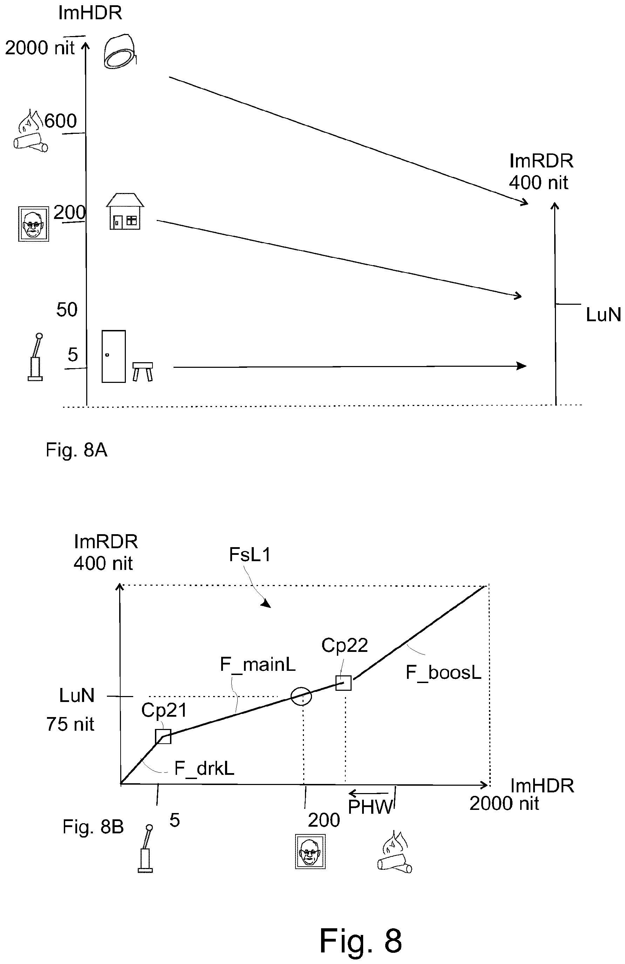

But first in **Fig. 8** we give an example of constructing (again easily and quickly).

The considerations for grading a HDR primary grading, are typically to make all scene objects visually reasonable (i.e. not too dark and badly visible, not too excessive a brightness impact of one object versus another, the power of light objects, etc.) on a high quality image representation, which will be the usually archived master grading, which typically serves for driving secondary gradings. So one sets most objects already more or less right, luminance-wise, which can be illustrated with the darkest objects (and e.g. a keep darkest objects equal luminance on all gradings re-grading approach).

Now the secondary grading may primarily involve considerations how to best squeeze the range of object luminances in the primary grading, so that it nicely fits in the smaller dynamic range. Nicely fits means that one tries to maintain as much as possible the original look of the primary grading. E.g. one may balance on the one hand intra-object contrast which keeps sufficient visual detail in the flames, versus inter-object contrast, which tries to make sure that the flames look sufficiently brighter than the rest of the room, and are not of adjacent brightness. This may involve departing from the equal luminance concept and darkening the darkest object somewhat. In any case, even if the technical and artistic details of curve construction may differ, the technical user interface and math behind it may be the same or similar (and the camera will similarly use such functions for in parallel calculating and outputting position-dependent secondary grading(s) RDR).

E.g., typical scene objects like the painting may be given a normal luminance LuN in the RDR grading. Because the painting is lit, and also because the 400 nit ML_V max. luminance of the RDR grading easily allows for it, we may want to give the painting pixels luminances around 75 nit instead of 50 nit. The circle now is not a control point, since in this strategy it is a point somewhere along a range of luminances or corresponding regrading function segment (the main segment F_mainL). It might be sufficient to use this segment for many of the colors, but in general the needs of compression desire a multi-segment curve for ImHDR-to-ImRDR re-grading. But in this example we also want to do this by giving some importance to the RDR grading result of the flames. So we may want to contrast-boost the flames somewhat. So the actual second control point Cp22 can be positioned some distance PHW from the average luminances or minimal luminance of the flame object, say in the middle compared to the painting. The selected e.g. linear segment for the main, normal object luminances will then continue on the lower end to this Cp22. In this example it was considered that boosting from Cp22 to (max ImHDR, max_ImRDR), i.e. (2000, 400) was considered a good re-grading for not only the flames but also all other bright objects in this position of the scene (establishing boost segment F_boosL of this regrading function FsL1. Note that in this example we show the regrading in the absolute axis system ending at the respective ML_V values in nits, rather than the normalized 1.0. This is not because one has to do one kind of grading in this domain and the other in the other, but to elucidate that all variants are equally possible. The segments of the darks of the scene (F_drkL) may again be automatically from where the CC director shifted his lower control point Cp21 to, and, if that is considered fine, he will not create another control point for those objects (e.g. instead of continuing it to (0,0), he may consider vertically raising the start to (0, Xnit) to brighten the darkest pixels). Fig. 8A roughly shows the desiderate for the RDR grading, by projecting a few key objects and their representative luminance or luminances, and Fig. 8B shows determination of an actual curve, i.e. an actual secondary grading functions FsL1, for the indoors, which may have been coordinated with the outdoors. We show linear segments for both the primary grading from the raw digital numbers and the secondary grading, but for any or both of those one or more segments may also be curved, e.g. have a slight curvature compared to the linear function. Linear functions are easy and when e.g. applied to the luminance channel only (whilst e.g. typically keeping hue and saturation, or corresponding Cb and Cr substantially unchanged) work sufficiently well, but some people may prefer curved segments for the grading curves.

**Fig. 9** shows some elucidation examples on how various embodiments of the camera's location identification circuit (540) can identify in which position, roughly or more precisely (and possible which orientation) the camera operator is currently shooting. The technology of image analysis is vast after decades of research, so several alternative algorithms can be used. Fig. 9A shows that in addition to merely determining "that" we are shooting in a room (often the basic capturing parameters and functions have been determined in such a manner that they are good for any manner of shooting in that room, and maybe adjacent rooms just as well, but not outside), advanced embodiments could also use 3D scene estimation techniques to determine where in the room and in which orientation the camera is shooting. The accuracy of this measurement need of course not be as high as for e.g. depth map estimation, so we can use many techniques, and cheaper techniques which require less calculations. We need not know exactly on centimeter accuracy where the center of the lens is located, because the mapping functions and basic capturing parameters are supposed to work identically whether 10% of the window is in view, or (e.g. zoomed) even 100% (i.e. all the pixels of the current indoors shot image are imaging sunlit outdoors objects). Here you see again the major difference in approach with classical auto-exposure techniques, which would of course yield totally different settings if one zoomed on the window (in fact, they would yield the outdoors settings, instead of the outdoors seen from indoors settings). So geometry can be determined, e.g. after having done basic object feature extraction and/or analysis, by calculating distances on the sensor of distances DP between objects, shifts of objects on the sensor relating to camera rotation, etc.

Since oftentimes we only need to recognize the room by recognizing a few typical objects, we focus on that with Fig. 9B and 9C.

Fig. 9B shows an example of an interesting, popping-out feature (i.e. the discovery can find it as interesting in the "blandness" or chaoticness of other features), the red bricks of the chimney. E.g., if red is a seldomly occurring color in this room, it may already be counted as a popping-out feature, at least a starting feature. These bricks can even be determined size-independently, i.e. position-independently, by looking for red corners on grey mortar (if size-dependent features are desired, like a rectangle, or e.g. the total shape of the fireplace, which may e.g. be coded as distances and angles of linear boundary segments or similar, then the algorithm can zoom the image or parts of it in and out a few times, or apply other techniques). So e.g. two adjacent bricks have been summarized as such adjacent patterns, in a manner which can be determined by (as non-limiting example) the G-criterion, or generalized G-criterion (see e.g. Sahli and Mertens: Model-based car tracking through the integration of search and estimation Proc. Of SPIE Conf. on Enhanced and Synthetic Vision 1998, p. 160-).

The idea behind the G-criterion, is that there are elements (pixels in image processing typically) with some properties, e.g. in a simple example of the fireplace a red color components, but it can also be complex aggregated properties resulting from pre-calculations on other properties. The element properties typically have a distribution of possible values (e.g. the red color component value may depend on lighting). And they are geometrically distributed in the image, i.e. there are positions where there are red brick pixels, and other positions where there aren't. Fig. 9C elucidates the concepts of the principles.

Say we take e.g. a measure which will be high for red bricks (saturated color), and low for unsaturated grey mortar. For the mortar, approximately R=G=B, and for the bricks R» G,B

So we could take as discrimination property P e.g. the function R- (G+B)/2 (or maybe a ratio of R/(R+G+B)). One expects a "dual lobe" histogram, where one type of "object" lies around one value, e.g. 1/3, and another type around another value, e.g. ½< P <=1.

Now one selects two sampling regions R1 and R2 for a traveling sampling filter which checks several positions of the image.

Now one calculates the G-criterion as:

$$G= \text{sum over all possible values Pi [abs\_value\_of (number\_occurences\_Pi\_in\_R1 minus}$$

$$\text{number\_occurences\_Pi\_in\_R2 )]/normalization} \qquad \text{Eq. 1}$$

The idea is also to shape the regions sensibly, to what one would expect, so R1 could be the L-shaped mortar region around a brick, and R2 the piece of brick within it.

What will then happen when the G-criterion detector is positioned on such a brick boundary.

If we run the possible P value Pi from low to high, we see that low values around 1/3 will occur a lot in the mortar, so we have e.g. (theoretically) A_R1, which is the area or amount of pixels in the L-shaper region R1, if all pixels are perfectly achromatic. In R2, there will be no such colorless pixels. So the first term of the sum becomes A_R1. We take the size (in pixels, but not the shape) of the second region typically the same. Suppose the bricks have only maximally red pixels R= 255, G=B=0.

Then there are a lot of Pi values which will give zero occurrence (Np) in either region, and not contribute to the sum. Finally, there are pixels which only occur in the red brick region R2, namely with value Pimax = 1. There will be again A_R2=A_R1 of those. So the sum will be 2*A_R1. If we take the normalization factor to be also 2*A_R1, the G-criterion will for detection give 1.0. If we position this analysis filter over all brick pixels, both regions will only contain P values equal to 1, ergo, only one bin will count A_R1 - A_R2 =0.

So the G-criterion detects what there is, and where, by yielding a value close to 1.0 if present. And 0 if not. The statistics of the G-criterion is somewhat complex, but the power is that one can input any (or several) properties P as desired. E.g., if the room is characterized by wallpaper with yellow striped on black, next to a uniformly painted wall, one can calculate an accumulating sum or derivative for the stripped pattern. E.g., if yellow is classified as +1 and blue as -1, one can calculate a P feature by measuring pixel colors at positions halfway a number of colored wallpaper bands, and obtain a local representative feature P= M1 + (-1)*M2+ M3 + (-1)*M4, where the binarized measurements M1-M4 depend on the underlying pixel colors, i.e. for the wallpaper one obtains P= 1 + (-1)*(-1)+ 1 + (-1)*(-1)=4. Any texture measure, or color measure, or geometrical measure can be constructed and used in the G-criterion. Also the shape of the sampling regions can elegantly determined at will (only the amount of sampled pixels should be the same for easy comparison and normalization).

The generalized G-criterion doesn't contrast a feature situation present in one location with a neighboring, e.g. adjacent location of the image, but contrasts with a general feature pattern. E.g. if a red patch is known to have P-values well above 1/3rd, or for the subtraction above zero, one can contrast the occurring bins of various red colors with a reference bin of zero. I.e., whether that color patch occurs in the image or not, one can compare (per se) a sole red area R1 anywhere in the image with a virtual region R2 which consists of all Pimin=0 values, and may have a rectangular shape.

The G-criterion can just be a first phase, to select candidates, and further more detailed algorithms may be performed, in case increased certainty is needed.

So in general, upon initialization, the location identification circuit (540) ingests one or more images from this location, e.g. typically master capturings RW with the basic capturing settings for this location. It starts determining conspicuous features, such as e.g. rare colors, corners, etc. It can construct slightly more structured low level computer vision features for these conspicuous objects, e.g. the brick detector with the G-criterion. It may store several representations for these representative objects, such as e.g. a small part of the image to be correlated, a description of the boundary of a shape, etc. It may construct various mid-level computer vision descriptions for the position, and store these.

During the determination phase of the position during the actual shoot, the location identification circuit (540) will do one or more such calculations, to establish the estimate of which position the camera resides in. It may cross-verify by doing some extra calculations, e.g. checking whether this indoors position is not perhaps somewhere in the outdoors scene, by checking some color-texture-patterns typical for the outdoors on a ingested copy of some of the presently captured images.

Note that such an identification of typical structures in anything, here images of various locations, is also typical of what one would find learned in the hidden layers of a neural network. Indeed, as NN processors are becoming more common and cheaper, one could use such an IC, at least for situations where one can afford the effort of doing sufficient learning (e.g. if one is going to use this location of these locations often, because you are e.g. the company communication officer, and this is your company campus). But other variant may rely on the user just capturing a few images of a scene which he considers representative for identification (which humans are very good at, e.g. he will capture an image of the portrait and below the fireplace, which is something unlikely to be seen in the forest outside), and then when he starts drinking his coffee before the shoot, the circuit's algorithms start doing the straightforward (non-learned) statistical image analysis.

The algorithmic components disclosed in this text may (entirely or in part) be realized in practice as hardware (e.g. parts of an application specific IC) or as software running on a special digital signal processor, or a generic processor, etc.

It should be understandable to the skilled person from our presentation which components may be optional improvements and can be realized in combination with other components, and how (optional) steps of methods correspond to respective means of apparatuses, and vice versa. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk or tape, data present in a memory, data travelling via a network connection -wired or wireless-, or program code on paper. Apart from program code, characteristic data required for the program may also be embodied as a computer program product.

Some of the steps required for the operation of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other regions of the claims, we have for conciseness not mentioned all these options in-depth. Apart from combinations of elements of the invention as combined in the claims, other combinations of the elements are possible. Any combination of elements can be realized in a single dedicated element.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements.

**Claims**

1. A method of in a video camera (201) setting a video camera capturing mode of specifying output pixel luminances in one or more graded versions of output video sequences of images, comprising:

   - an operator of the video camera moving to at least two positions (Pos1, Pos2) in a scene which have a different illumination compared to each other, and capturing at least one high dynamic range image (o_ImHDR) for each of those at least two positions of the scene;
   - a color composition director analyzing for each of the at least two positions the captured at least one high dynamic range image to determine a region of maximum brightness, and determining at least one of an iris setting, a shutter time, and an analog gain setting for the camera;
   - capturing for each position of one of the at least two positions (Pos1, Pos2) a respective master capturing (RW) using the at least one of an iris setting, a shutter time setting, and an analog gain setting for the camera, and keeping iris, shutter time and analog gain settings constant for later capturing in at least the corresponding position;
   - determining at least a respective first graded image (ODR) for the respective master capturing, which consists of mapping by a respective luminance allocation function (FL_M) of digital numbers of the master capturing to nit values of the first graded image (ODR), by the color composition director establishing a shape of such luminance allocation function; and
   - storing the respective luminance allocation functions (Fs1, Fs2) for the at least two positions, or parameters uniquely defining these functions, in respective memory locations (221, 222) of the camera.

2. The method of in a video camera (201) setting a video camera capturing mode as claimed in claim 1, further comprising:

   - determining by the color composition director for the at least two positions two respective secondary grading functions (FsL1, FsL2) for calculating from the respective master capturing (RW) or luminances of the first graded image a corresponding second graded image (ImRDR); and
   - storing the secondary grading functions (FsL1, FsL2), or parameters uniquely defining these functions, in a memory (220) of the camera,
   - wherein the second graded image (ImRDR) has a lower maximum luminance than the first graded image.

3. A method of capturing high dynamic range video in a video camera, the video camera outputting at least one graded high dynamic range image with its pixels having allocated luminances, the method comprising:

   - applying the method of in a video camera (201) setting a video camera capturing mode as claimed in claim 1 or 2;
   - determining a corresponding position of the at least two positions (Pos1, Pos2) for a current capturing position;
   - loading the corresponding luminance allocation function (Fs1) for that position from memory (220) of the camera; and

- applying the luminance allocation function (Fs1) to map digital numbers of successive images being captured while capturing at the current position, to corresponding first graded images (ODR; ImHDR), and storing or outputting those images.

4. The method as claimed in claim 3 in which the camera (201) comprises a user interaction device such as a double throw switch (249), to toggle through function memory locations of stored positions of different illumination in a shooting environment, which when pushed in one direction select the previous position in a chain of linearly linked positions and when pushed in opposite direction selects the next position.

5. The method as claimed in claim 3 in which the camera (201) comprises a speech recognition system to select a stored luminance allocation function or secondary grading function based on an associated description of a position, such as e.g. "living room".

6. The method as claimed in claim 3 in which the camera (201) comprises a location and/or orientation determination circuit, such as based on triangulation with a positioning system temporarily placed in a region of space around the at least two positions.

7. The method as claimed in claim 3 in which the camera (201) comprises a location identification system based on analysis of a respective captured image in a vicinity of each of the at least two positions.

8. A method of in a secondary video camera (402) setting a video camera capturing mode of specifying output pixel luminances in one or more graded versions of output video sequences of images, comprising setting in a first video camera (401) a video camera capturing mode of specifying output pixel luminances in one or more graded versions of output video sequences of images as claimed in claim 1 or 2, and communicating between the camera to copy a group of settings, including the iris setting, shutter time setting and analog gain setting, and any of the determined luminance allocation functions from memory of the first camera to memory of the second camera.

9. The method of in a secondary video camera (402) setting a video camera capturing mode as claimed in claim 8, in which one of the first video camera and the second camera is a static camera with a fixed position in a part of the shooting environment, and the other camera is a moveable camera, and either copying the luminance allocation function for the position of the static camera into a corresponding function memory of the movable camera, or copying the luminance allocation function in the movable camera for the position of the static camera from the corresponding function memory of the moveable camera to memory of the static camera.

10. A system (200) for configuring a video camera, comprising:

- a video camera (201) for which to set a capturing mode of specifying output pixel luminances in one or more graded versions of output video sequences of images to be output by the video camera to a memory (208) or communication system (209),
- wherein the camera comprises a location capturing user interface (209) arranged to enable an operator of the video camera to move to at least two positions (Pos1, Pos2) in a scene which have a different illumination compared to each other, and to capture at least one high dynamic range image (o_ImHDR) for each position which is selected via the location capturing user interface (209) to be a respresentative master HDR capturing for each location;
- an image color composition analysis circuit (250) arranged to receive the respective at least one high dynamic range image (o_ImHDR) and to enable a color composition director to analyze the at least one high dynamic range image (o_ImHDR), to determine
- a) a region of maximum brightness of the image, and based thereupon at least one of an iris setting, a shutter time, and an analog gain setting for the camera and
- b) via a function determination circuit (251) for at least a respective first graded image (ODR) corresponding to the respective master capturing, a respective luminance allocation function (FL_M) of digital numbers of the master capturing to nit values of the first graded image (ODR) for the at least two positions; and
- wherein the camera comprises a functions memory (220) for storing the respective luminance allocation functions (Fs1, Fs2) for the at least two positions, or parameters uniquely defining these functions, as determined by and received from the image color composition analysis circuit (250).

11. A system for configuring a video camera (200) as claimed in claim 10, **characterized in that** the function determination circuit (251) is arranged to enable the color composition director to determine for the at least two positions two respective secondary grading functions (FsL1, FsL2) for calculating from the respective master capturing (RW) or the first graded image (ODR) a corresponding second graded image (ImRDR), and the camera (201) is arranged to store in memory for future capturing those secondary grading functions (FsL1, FsL2).

12. A camera comprising a system as claimed in claims 10 or 11, or configured to operate in a system of claims 10 or 11, wherein the camera has a selection user interface (230) arranged to select from memory a luminance mapping function or secondary grading function corresponding to a capturing position.

13. A camera as claimed in claim 12, comprising a user interaction device such as a double throw switch (249), to toggle through function memory locations of stored positions of different illumination in a shooting environment, which when pushed in one direction select the previous position in a chain of linearly linked positions and when pushed in opposite direction selects the next position.

14. A camera (201) as claimed in claim 12 comprising a speech recognition system (520), and preferably a multi-microphone beam former system directed towards the camera operator, to select a stored luminance allocation function or secondary grading function based on an associated description of a position, such as e.g. "living room".

15. A camera (201) as claimed in claim 12, 13, or 14 comprising a location and/or orientation determination circuit (511), such as the location determination being based on triangulation with a positioning system placed in a region of space around the at least two positions, and such as the orientation determining circuit being connectable to a compass.

16. A camera (201) as claimed in claim 12, 13, 14 or 15 comprising a location identification circuit (540) based on analysis of a respective captured image in a vicinity of each of the at least two positions.

Fig. 1A

Pos1

Pos2

EP 4 366 312 A1

PQ

1500 nit

25 nit

Fopt

F1

RDR

RDR

DEL

Fig. 1B

Fig. 1C

PQ

Fig. 1

Fig. 2

Fig. 3

Fig. 4

**Fig. 5**

EP 4 366 312 A1

Fig. 6

FL_M= CC*RC

Fig. 7

ImHDR

2000 nit

600

200

50

5

ImRDR
400 nit

LuN

Fig. 8A

ImRDR
400 nit

FsL1

Cp22

F_mainL

F_boosL

LuN
75 nit

Cp21

F_drkL

ImHDR
2000 nit

PHW

5

200

Fig. 8B

Fig. 8

Fig. 9A

DP

Fig. 9B

R1

R2

Np

P

Fig. 9

Fig. 9C

Europäisches
Patentamt

European
Patent Office

Office européen
des brevets

# EUROPEAN SEARCH REPORT

Application Number

EP 22 20 5268

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/180759 A1 (MERTENS MARK JOZEF WILLEM [NL]) 22 June 2017 (2017-06-22)<br>* claim 1 *<br>* figure 2 *<br>* paragraph [0042] *<br>----- | 1-16 | INV.<br>H04N19/98<br>H04N23/741<br>H04N5/57 |

TECHNICAL FIELDS
SEARCHED      (IPC)

H04N

The present search report has been drawn up for all claims

| Place of search | Date of completion of the search | Examiner |
|---|---|---|
| The Hague | 22 March 2023 | Benzeroual, Karim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 20 5268

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2023

| Patent document cited in search report | | Publication date | Patent family member(s) | Publication date |
|---|---|---|---|---|
| US 2017180759 A1 | | 22-06-2017 | BR 112017002313 A2 | 16-01-2018 |
| | | | CN 107005720 A | 01-08-2017 |
| | | | EP 3178231 A1 | 14-06-2017 |
| | | | JP 7053259 B2 | 12-04-2022 |
| | | | JP 7053259 B6 | 01-06-2022 |
| | | | JP 2017528971 A | 28-09-2017 |
| | | | JP 2022058724 A | 12-04-2022 |
| | | | KR 2017044129 A | 24-04-2017 |
| | | | MX 368411 B | 02-10-2019 |
| | | | RU 2017107185 A | 10-09-2018 |
| | | | US 2017180759 A1 | 22-06-2017 |
| | | | WO 2016020189 A1 | 11-02-2016 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0152698 A